(19) Europäisches Patentamt / European Patent Office / Office européen des brevets

(11) **EP 3 014 010 B1**

(12) **EUROPEAN PATENT SPECIFICATION**

(45) Date of publication and mention of the grant of the patent:
**23.09.2020 Bulletin 2020/39**

(21) Application number: **13732170.9**

(22) Date of filing: **28.06.2013**

(51) Int Cl.:
*D06F 58/20* (2006.01)  *A47L 15/48* (2006.01)
*F28F 3/00* (2006.01)

(86) International application number:
**PCT/EP2013/063614**

(87) International publication number:
**WO 2014/206483 (31.12.2014 Gazette 2014/53)**

(54) **HEAT PUMP LAUNDRY DRYER AND METHOD TO OPTIMIZE THE HEAT EXCHANGE OF SUCH A HEAT PUMP LAUNDRY DRYER**

WÄRMEPUMPENTROCKNER UND VERFAHREN ZUR VERBESSERUNG DES WÄRMEAUSTAUSCHES EINES SOLCHEN WÄRMEPUMPENTROCKNERS

SÈCHE-LINGE À POMPE À CHALEUR ET PROCEDÉ D' AMELIORER L' ÉCHANGE DE CHALEUR DE CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.05.2016 Bulletin 2016/18**

(73) Proprietor: **Electrolux Appliances Aktiebolag**
**105 45 Stockholm (SE)**

(72) Inventors:
• **CAVARRETTA, Francesco**
**I-33080 Porcia (PN) (IT)**

• **ZANDONA', Stefano**
**I-33080 Porcia (PN) (IT)**

(74) Representative: **Electrolux Group Patents**
**AB Electrolux**
**Group Patents**
**105 45 Stockholm (SE)**

(56) References cited:
EP-A1- 1 391 550        EP-A2- 1 209 277
CN-A- 101 793 451      CN-A- 102 230 693
DE-A1-102011 104 853   DE-U1-202006 014 718
US-A1- 2011 280 736

## Description

### Field of the invention

The present invention relates to a laundry dryer including a heat pump, in particular to a laundry dryer which optimizes the energy consumption and/or the duration of the drying cycles. In addition, the invention relates to a method to optimize the heat exchange of such a heat pump.

### Background art

Most dryers consist of a rotating drum called a tumbler, thus called tumble dryer, through which heated air is circulated to evaporate the moisture from the load. The tumbler is rotated around its axis.

Known laundry dryers include two categories: condense laundry dryers and vented laundry dryers. Dryers of the first category circulate air exhausted from the drum through a heat exchanger/condenser to cool the air and condense the moisture; they subsequently recirculate the air back through the drum, after having heated the same using a heater. Dryers of the second category draw air from the surrounding area, heat it, blow it into the drum during operation and then exhaust it through a vent into the outside.

Generally, dryers of the first category are the most common in the market, due to the fact that they do not require special means for proper installation such as an exhaust duct to exhaust the humid hot air coming from the drum. However, commonly, for the same power and the same amount of load, the drying cycle of a condensed dryer is longer than an equivalent cycle in a vented dryer.

Several solutions have been proposed according to the prior art in order to improve the efficiency of condense and vented dryers. In particular, heat pump technology has been applied to laundry dryer in order to enhance the efficiency in drying clothes. In traditional heat pump drier, air flows in a close loop. The air, moved by a fan, passes through a drum removing water from wet clothes, and then it is cooled down and dehumidified in a heat pump evaporator and heated up in a heat pump condenser to be re-inserted into the drum. In order to function, the heat pump includes a refrigerant with which the air is in thermal exchange, and the refrigerant is compressed by a compressor, condensed in the condenser laminated in an expansion device and then vaporized in the evaporator.

EP 1209277, which can be considered as closest prior art, discloses a heat-pump clothes drying machine in which the motor used to drive the drum holding the clothes to be dried is also connected to a first fan, which circulates the drying air, as well as a second fan that cools the compressor.

US 2011/0280736 relates to a control method of a dryer. A control method of a dryer including a heat pump having a variable velocity type compressor, the control method includes steps of selecting at least one course supplying air or dried air; increasing an activation velocity of the compressor to a target velocity, as the selected course is implemented; and adjusting an open degree of an expansion valve provided in the heat pump.

DE102011104853 discloses an exchanger which has a region with heat exchanger pipes that are partially arranged in an edge region of an airflow surface. Another region is provided with other heat exchanger pipes that are partially arranged in a central region of the airflow surface. The former pipes in the former region exhibit distance to each other, and the latter pipes in the latter region exhibit another distance, which is different from the former distance. The former and latter pipes are arranged adjacent to each other. The exchanger is made of metal alloy or plastic or ceramic material. An independent claim is also included for a cooling module

### Summary of the invention

The present invention is relative to a laundry dryer for drying clothes and other garments including a heat pump having first and second heat exchangers. The laundry dryer of the invention may include either a vented or a condense dryer. The configuration of the heat exchangers in the laundry dryer of the invention is such that an optimal heat transfer capacity is achieved, substantially tailored on the specific geometry of the laundry dryer. Preferably, according to the layout of the internal component(s) of the laundry dryer, in particular preferably of the air circuit and of the fan, an optimized geometry of the heat exchanger(s) for maximizing the heat exchange between the refrigerant and the process air of the laundry dryer having that specific air circuit layout is obtainable according to the invention. Moreover, a method to optimize such a heat exchange is disclosed as well.

The heat pump dryer includes a drying chamber, such as a drum, in which the load, e.g., clothes, to be dried is placed. The drying chamber is part of a process air circuit; in particular a closed-loop circuit with a condensed dryer which includes an air duct for channeling a stream of air to dry the load. The process air circuit is connected with its two opposite ends to the drying chamber. Preferably, heated dehumidified air is fed into the drying chamber, flowing over the laundry, and the resulting humid cool air exits the same. The humid air stream rich in water vapor is then fed into an evaporator of a heat pump, where the moist warm process air is cooled and the humidity present therein condenses. The resulting cool dehumidified air is then either vented outside the dryer in the ambient where the latter is located or it continues in the closed-loop circuit. In this second case, the dehumidified air in the process circuit is then heated up before entering again in the drying chamber by means of a condenser of the heat pump, and the whole loop is repeated till the end of the drying cycle. Alternatively, ambient air enters into the drum from the ambient via an inlet duct and it is heated up by the condenser of the heat pump before entering the drying chamber.

The heat pump of the apparatus includes a refrigerant circuit in which a refrigerant can flow and which connects via piping a first heat exchanger or condenser, a second heat exchanger or evaporator, a compressor and a pressure-lowering device. The refrigerant is pressurized and circulated through the system by the compressor. On the discharge side of the compressor, the hot and highly pressurized vapor is cooled in the first heat exchanger, called the condenser, until it condenses into a high pressure, moderate temperature liquid, heating up the process air before the latter is introduced into the drying chamber. The condensed refrigerant then passes through the pressure-lowering device such as an expansion device, e.g., a choke, a valve or a capillary tube. The low pressure liquid refrigerant then enters the second heat exchanger, the evaporator, in which the fluid absorbs heat and evaporates due to the heat exchange with the warm process air exiting the drying chamber. The refrigerant then returns to the compressor and the cycle is repeated.

In some embodiments, in the first and/or second heat exchangers, the refrigerant may not be subject to a phase transition.

In the following, with the terms "downstream" and/or "upstream", a position with reference to the direction of the flow of a fluid inside a conduit is indicated. Additionally, in the present context, the terms "vertical" and "horizontal" are referred to the positions of elements with respect to the dryer in its normal installation or functioning. Indeed, a horizontal plane (X,Y) formed by two horizontal X,Y perpendicular directions is defined, and a vertical direction Z, perpendicular to the horizontal plane, is defined as well in a 3-D space.

Applicants have considered a heat pump dryer wherein the first and/or the second heat exchanger of the heat pump includes one or more modules realized as follows. Each module includes two headers, which can be an inlet header to allow the inflow of refrigerant into the module and/or an outlet header to allow the refrigerant to discharge from the module. Further, the module includes a plurality of heat exchange layers stacked in a stackwise direction (e.g., the layers are disposed one on top of the other along a given direction). Each heat exchange layer includes more than one channel for the refrigerant flow, the channels being located one adjacent to the other(s) within the layer. The channels are in fluid communication with the inlet and/or the outlet header so that the refrigerant is allowed to flow from the inlet to the outlet header and/or vice versa. Preferably, the plurality of channels is parallel to each other within each heat exchanger layer. Each heat exchange layer defines two opposite ends, one of which is fixed to said either inlet or outlet header, the layers thus departing from the inlet and/or the outlet header.

Preferably, within each heat exchange layer, the plurality of channels is also substantially parallel to each other, however they can also be angled or they can have an irregular shape.

Preferably, the stackwise direction is a vertical direction and the heat exchange layers are stacked one on top of the other.

The heat exchange layers have a given width which depends on the number of channels realizing the layer and a longitudinal extension, which corresponds to the longitudinal extensions of the channels forming the same. The width and the longitudinal extension direction preferably define a plane. This plane might be perpendicular to the vertical stacking direction of the layers, or it can form an angle with the same. Alternatively, the heat exchange layers may be tilted one with respect to the other or may form arches one on top of the other.

Preferably, channels of neighboring (i.e., adjacent in the stacking direction) layers in the stacking direction are connected by fins.

It is to be understood that the inlet and outlet headers may be at a given distance from each other, so that the heat exchange layers are connected at their opposite ends to the inlet and outlet headers, respectively, e.g., the heat exchange layers are interposed between the inlet and the outlet headers, or the inlet and outlet headers can be located one in contact or adjacent to the other for example one on top of the other, so that the heat exchange layers are attached with one end to the inlet or to outlet header and with the opposite end to an intermediate header. In the first case, the refrigerant flows from the inlet to the outlet header bridging a single heat exchange layer, while in the second case from the inlet header the refrigerant has to flow through at least two heat exchange layers, one flowing in one direction and one flowing in substantially the opposite direction, in order to reach the outlet header.

The plurality of channels is subjected to, at least in part, the process air stream so that there is heat exchange between the refrigerant flowing within the channels and the process air. For this purpose, therefore, at least partially, preferably for their whole extension, the channels of the heat exchange layers of the modules of the first and/or second heat exchanger are located within the air duct, part of the process air circuit.

The headers have the function of holding the various layers and as an inlet and/or outlet for the refrigerant into the module.

Applicants have realized that the process air flowing in the air circuit of know laundry dryers is not spatially uniform, in other words, it does not have a uniform spatial flow rate within the air conduit. Taking a cross section of the air conduit in any location of the same, the air flowing through that section has in general different velocities in different points of the section and also the flow rate is different in different areas of the section. Thus, for each section of the air conduit, different regions can be defined, depending on the value of the flow rate in each region.

For example, given an average flow rate of the process air flowing through a given air circuit section, "high" regions, "very high" regions, "low" regions and "very low" regions can be defined, depending on the relative value of the flow rate of the process air calculated that specific region, when compared to the average flow rate.

Moreover, the direction of flow of the air is also not always parallel to walls of the air conduit. The flow lines of the process air stream can follow complex patterns within the air circuit.

This non-uniformity is due to the construction of the air conduit itself: process air inside a laundry dryer is not commonly flowing along straight ducts, on the contrary there are several bends and curvatures in the conduit as well as elements, such as for example a lint filter, which the process air flow has to traverse and which may cause turbulence and flow deviations.

As an example, in some dryers, the process air exits the drying chamber through an aperture realized in the boundary of a door of the casing and it bends downwards passing through a filter to collect lint. Furthermore, the process air bends again to flow within the basement of the casing, wherein there is generally available space to locate the heat exchanger(s) of the heat pump.

In other dryers, the process air exits the drying chamber through apertures realized in the chamber itself in the uppermost region of the same and returns in the chamber via apertures realized in a lowermost region of the chamber, the process air thus flowing on the top region of the casing of the laundry dryer where the heat exchangers are located in order to exchange heat with the process air.

Furthermore, generally, in an air conduit a fan is present in order to blow process air forcing the circulation of the same along the air circuit itself. Again, due to constrains imposed by the casing limited volume and the presence of several elements inside the latter, the fan is not always located centrally with respect to the air conduit, but it might be off-center implying that it blows air closer to one (or more) of side walls of the conduit than to the other(s). Thus, this off-centering of the fan also causes an asymmetry in the flow rate of the process air through the air conduit.

Moreover the dimension in cross section of the active area of the fan, e.g., the width of the blades which form in motion a circumference along which the air is blows, in generally different than the cross section of the active areas of the heat exchangers, e.g., the area in which heat exchange takes place.

The uniformity or non-uniformity of the process air flow within the duct where the heat exchangers are located is also depe4ndent on the relative position between the heat exchangers themselves and the fan.

Preferably, the fan can be located downstream the condenser and upstream the drying chamber or upstream the evaporator and downstream the drying chamber along the air circuit.

Due to the fact that the heat exchange takes place mainly in the channels forming the heat exchange layers, and optionally in the fins connecting the stacked heat exchange layers, when fins are present, Applicants have realized that the spatial non-uniformity of the process air flowing through the module also affects the heat exchange efficiency of the same. Heat exchangers are generally designed to maximize the surface area between the two fluids which have to exchange heat, in this case the refrigerant and the process air, while minimizing resistance to fluid flow through the exchanger. Thus, in general, modules are designed having a given distance among the various stacked heat exchange layers and given fins, which are chosen taking into consideration a possible average value of the process air which will exchange heat with these surfaces. However, in case of a non-uniform flow, there are regions of the module in which "too much air" is traversing them for the geometry present (e.g., for the amount of surface available for heat exchange in these regions of the module) and other regions of the module which, due to the limited amount of process air flowing through them, are substantially oversized. Thus, efficiency is lost and less heat exchange is taking place for the available surface present in the module.

Applicants have therefore realized that the geometry of the module can be varied, without changing the overall surface extension available for the heat exchange, which implies without changing costs and manufacture complexity in building the module. In other words, Applicants have realized that the available surface for heat exchange can be used in a more efficient manner.

Applicants have understood that locating most of the surface available for heat exchange "where it is needed", which is where there is the highest process air flow rate within the module, would optimize the heat exchange. As mentioned, the heat exchange takes place mainly in correspondence to the heat exchange layers and in correspondence to the fins, when present, between the heat exchange layers.

In order to optimize the heat exchange, Applicants have optimized the fins and/or the heat exchange layers' geometrical configuration to obtain the maximum extension of heat exchange surface where the process air is flowing most. Applicants have found that modifying either the distance between the heat exchange layers or the fins' pitch, or both, is achieving the desired heat exchange efficiency.

Fin pitch refers to the spacing between the fins of a finned heat exchanger. It is often related as a measure of the fin density which is expressed in terms of fins per cm. Fin pitch is generally measured from the centerline of one fin to another and can be determined from summing the fin spacing (distance between fins) and the fin thickness. Generally speaking, smaller fin pitches result in denser fin arrays which can remove more heat.

In the present context, a fin is a surface that extends from an object to increase the rate of heat transfer by increasing convection.

Adding a fin to an object, in this case a surface of the heat exchange layers, increases the surface area for the heat exchange. Fins of any type and geometry can be applied to the present invention. The fins are interposed between two adjacent vertically stacked heat exchange layers of the module. Fins can be present among each couple of adjacent heat exchange layers, or only among some of them.

According to a first aspect, the invention relates to a laundry dryer comprising:

a. a casing supporting a drying chamber for receiving a load to be dried;
b. A process air conduit in communication with the drying chamber where a process air stream is apt to flow; the air process circuit being a closed loop circuit;
c. A heat pump having a heat pump circuit in which a refrigerant can flow, said heat pump circuit including a first heat exchanger where the refrigerant is cooled off and the process air stream is heated up, and a second heat exchanger where the refrigerant is heated up and the process air is cooled off; said first and/or second heat exchanger being thermally coupled to the process air conduit to perform heat exchange between said refrigerant flowing in said heat pump circuit and said process air stream; said first and/or second heat exchanger further comprising a heat exchanger module, said module including

▪ An inlet header to direct a flow of said refrigerant into said module;
▪ an outer header to discharge said refrigerant from said module; and
▪ a plurality of heat exchange layers fluidly connecting said inlet to said outlet header to enable said refrigerant to flow from said inlet to said outlet header and/or vice versa; said layers being stacked one on top of the others and each layer including a plurality of channels;

characterized in that said heat exchanger module includes at least a first and a second couple of adjacent heat exchange layers along said stackwise direction, a distance between the two adjacent heat exchange layers of said first couple being different than a distance between the two adjacent heat exchange layers of said second couple.

In case the various heat exchange layers are parallel one to the others(s) along the stacking direction, the distance between any couple of two adjacent heat exchange layers is constant along the whole longitudinal extension of the two adjacent layers and it is thus well defined. In case the heat exchange layers are arch-shaped, with the same radius of curvature, the distance is also well defined, being also in this case the same along the total extension of the adjacent layers. In case the heat exchange layers are angled one with respect to the other(s), then the distance between any couple of two adjacent layers, being variable along the longitudinal extension of the two layers, is considered to be the average distance between the two adjacent layers.

According to the invention, the distance between each couple of adjacent heat exchange layers in the module can be tailored depending on the air process flow. The distance can be varied so that the available surface extension belonging to the channels where heat exchange takes place is wider where it is needed, e.g., where the flow rate is higher. Preferably, the distance between any couple of heat exchange layers which are adjacent to each other along the stacking direction can be tailored in order to be larger or smaller depending on the amount of process air flow passing between that specific couple of adjacent heat exchange layers.

In this way, without increasing the cost of the production of the laundry dryer, the heat exchange is optimized in a simple manner.

Preferably, said distance between the two adjacent heat exchange layers of the first couple and the distance between the two adjacent heat exchange layers of said second couple are comprised between 5 mm and 20 mm.

Applicants have verified that for laundry dryer, this range of distances is the optimal one for the heat transfer between the refrigerant and the process air in substantially all laundry dryers' models and types.

In a preferred embodiment, the module includes a first plurality of fins having a first pitch connecting the two adjacent heat exchange layers of said first couple and a second plurality of fins having a second pitch connecting said two adjacent heat exchange layers of said second couple; said first pitch being different than said second pitch.

As mentioned, the two geometries that can be easily modified without introducing complex changes in the modules of the heat exchangers are the layers' distance and the fins' pitch. A combination of changes in the two can be performed in order to obtain the optimum performance of the heat exchanger(s). In an analog manner to the distance variation among adjacent heat exchange layers, depending on the process air flow rate, also the pitch of the plurality of fins present between two adjacent heat exchange layers can be varied accordingly, as detailed below.

According to a second aspect, the invention relates to a laundry dryer comprising:

a. a casing supporting a drying chamber for receiving a load to be dried;
b. A process air conduit in communication with the drying chamber where a process air stream is apt to flow; the air process circuit being a closed loop circuit;
c. A heat pump having a heat pump circuit in which a refrigerant can flow, said heat pump circuit including a first heat exchanger where the refrigerant is cooled off and the process air stream is heated up, and a second heat exchanger where the refrigerant is heated up and the process air is cooled off; said first and/or second heat exchanger being thermally coupled to the process air conduit to perform heat exchange between said refrigerant flowing in said heat pump circuit and said process air stream; said first and/or second heat exchanger further comprising a heat exchanger module, said module including

- An inlet header to direct a flow of said refrigerant into said module;
- an outer header to discharge said refrigerant from said module; and
- a plurality of heat exchange layers fluidly connecting said inlet to said outlet header to enable said refrigerant to flow from said inlet to said outlet header and/or vice versa; said layers being stacked one on top of the others and each layer including a plurality of channels;

characterized in that said heat exchanger module includes at least a first and a second couple of adjacent heat exchange layers along said stackwise direction, a first plurality of fins having a first pitch connecting the two adjacent heat exchange layers of said first couple and a second plurality of fins having a second pitch connecting said two adjacent heat exchange layers of said second couple; said first pitch being different than said second pitch.

As described with reference to the first aspect, due to the non-uniformity of the process air flow, more heat exchange surface should be available in the regions where the flow rate is higher in order to have an optimal heat exchange process. This can be achieved via changing the distance between the adjacent heat exchange layers or changing the fins' pitch present between adjacent heat exchange layers.

Smaller the pitch, tighter is the density of fins and thus higher the surface for heat exchange present between the two adjacent heat exchange layers.

Preferably, said first and said second pitch are comprised between 2 mm and 10 mm.

Applicants have verified that for laundry dryer, this range of pitches is the optimal one for the heat transfer between the refrigerant and the process air.

In a preferred embodiment, in a module, a distance between the two adjacent heat exchange layers of said first couple is different than a distance between the two adjacent heat exchange layers of said second couple.

As mentioned, the two geometries that can be changed without introducing complex changes in the heat exchangers are the layers' distance and the fins' pitch. A combination of changes in the two can be performed in order to obtain the optimum performance of the heat exchanger(s).

In both first and/or second aspect, the following additional characteristics can be present, alternatively or in combination.

According to a preferred embodiment, said process air conduit includes an air duct having a process air inlet and a process air outlet, said air duct housing said plurality of heat exchange layers of said module.

The heat exchange layers in which the heat exchange takes place are located in a portion of the air circuit.

More preferably, said air duct and said module are reciprocally arranged so that a direction of flow of process air entering in said air duct is substantially perpendicular to said stacking direction.

It is preferable, in order to maximize heat exchange, that the process air stream flowing through the air duct "hits" the modules substantially in a perpendicular manner, i.e., in such a way that a module plane - defined by the module stacking direction and longitudinal extension - and the direction of the process air stream within the air duct are substantially perpendicular. In this way, air turbulence is minimized and heat transfer maximized. In case both first and second heat exchanger include a module, the preferred configuration is thus having the two modules substantially parallel within the air duct. More preferably, these two modules are also perpendicular to the longitudinal extension of the air duct. Advantageously, said air duct and said module are reciprocally arranged so that a direction of flow of process air entering in said air duct is substantially parallel to said heat exchange layers.

In this embodiment, the resistance encountered by the process air flowing through the module is minimized due to the fact that the various heat exchange layers are parallel to the direction of process air flow itself.

In an advantageous embodiment, said air conduit is so configured that the spatial distribution of the flow rate of the process air through a transverse section of said air conduit is spatially asymmetrical, having a region of higher flow rate and a region of lower flow rate.

The laundry dryer includes a fan to circulate said process air within said air conduit.

In this embodiment, preferably, said fan is so configured to blow said process air in such a way that the spatial distribution of the flow rate of the process air through a transverse section of said air conduit is spatially asymmetrical, having a region of higher flow rate and a region of lower flow rate.

The gift of the invention is particularly noticeable when the flow of process air is blown by a fan which is not symmetrically located within the air circuit, so that differences in flow rates are particularly evident along the air circuit. In this case, the change in the fins' pitch or layers' distance according to the invention and depending on the flow rate passing through the different regions of the module substantially affect the heat exchange efficiency of the module.

In the first aspect, said distance between said adjacent heat exchange layers of said first couple is larger than said distance between said second couple layers if said higher intensity region is substantially enclosing said second couple.

In said second aspect, said first pitch is smaller than said second pitch if said higher intensity region is substantially enclosing said first couple.

Higher the flow rate, the wider heat exchanging surface is needed in order to obtain an optimal heat exchange. Decreasing the pitch of the fins among two adjacent heat exchange layers or reducing the distance among two neighboring heat exchange layers increases the effective surface available for heat exchange in the same volume of the module and thus optimize the heat exchange. This decrease in distance compared to a standard distance or the decrease in pitch compared to a standard pitch is performed only in the region(s) of the module where it is necessary, e.g., only in the region(s) where there is an increase of flow rate with respect to the average flow rate through the whole module. The meaning of "standard" distance or pitch refers to that distance or pitch which would be used in case a symmetric flow rate is expected. Conversely, in the region(s) of the module in which there is a rather low flow rate, lower than the average, there is no need of such an additional surface for heat exchange and the decrease in pitch or reduced distance is not present, on the contrary, an increase in the pitch or an increase in the distance among adjacent heat exchange layers is introduced.

In an embodiment, both said first and second heat exchangers include the heat exchanger module, respectively called first and second heat exchanger module, and a first longitudinal direction of the heat exchange layers of said first module and a second longitudinal direction of the heat exchange layers of said second module are substantially parallel to each other.

In case both heat exchangers include heat exchanger modules, they are preferably parallel. The variation in distance among adjacent heat exchange layers and/or in pitch of the fins among adjacent heat exchange layers depending on the flow rate of the process air impinging on those adjacent heat exchange layers has also the function to partially uniform the process air flow. In case a first and a second modules are located along the air conduit, one in front of the other in the direction of flow of the process air stream, downstream the first module hit by the process air flow, the spatial distribution of the flow rate is different than the spatial distribution of the flow rate upstream the same first module due to the presence of the first module itself. The second module is thus hit by an air flow having a different spatial distribution than the one which has hit the first module. For this reason, the distance and/or the pitch of the fins among two adjacent layers in the first module the distance and/or the pitch of the fins among two adjacent layers in the second module at the same height along the stacking direction, can be differently selected because the air flow rate can be different, in particular it is more uniform on the second module. It is preferred to locate the various modules parallel one to the other in order to take advantage of this evening out effect on the process air flow after each module.

According to a third aspect, the invention relates to a method to improve the heat exchange in a heat pump laundry dryer, said laundry dryer comprising:

    a. a casing supporting a drying chamber for receiving a load to be dried;
    b. A process air conduit in communication with the drying chamber where a process air stream is apt to flow; the air process circuit being a closed loop circuit;
    c. A heat pump having a heat pump circuit in which a refrigerant can flow, said heat pump circuit including a first heat exchanger where the refrigerant is cooled off and the process air stream is heated up, and a second heat exchanger where the refrigerant is heated up and the process air is cooled off; said first and/or second heat exchanger being thermally coupled to the process air conduit to perform heat exchange between said refrigerant flowing in said heat pump circuit and said process air stream; said first and/or second heat exchanger further comprising a heat exchanger module, said module including

- An inlet header to direct a flow of said refrigerant into said module;
- an outer header to discharge said refrigerant from said module; and
- a plurality of heat exchange layers fluidly connecting said inlet to said outlet header (6;6') to enable said refrigerant to flow from said inlet to said outlet header and/or vice versa; said heat exchange layers being stacked one on top of the others and each layer including a plurality of channels;

the method including the steps of:

- measuring the spatial distribution of the flow rate of the process air flow in a portion of said air circuit where said module is located;
- determining regions of higher flow rate and lower flow rate of said process air around said module;
- selecting a distance along said stackwise direction between any two adjacent heat exchange layers so that the higher the flow rate of the region between said two adjacent heat exchange layers, the lower the distance between the same two heat exchange layers.

According to a fourth aspect, the invention deals with a method to improve the heat transfer in a heat pump laundry dryer, said laundry dryer comprising:

    a. a casing supporting a drying chamber for receiving a load to be dried;

b. A process air conduit in communication with the drying chamber where a process air stream is apt to flow; the air process circuit being a closed loop circuit;

c. A heat pump having a heat pump circuit in which a refrigerant can flow, said heat pump circuit including a first heat exchanger where the refrigerant is cooled off and the process air stream is heated up, and a second heat exchanger where the refrigerant is heated up and the process air is cooled off; said first and/or second heat exchanger being thermally coupled to the process air conduit to perform heat exchange between said refrigerant flowing in said heat pump circuit and said process air stream; said first and/or second heat exchanger further comprising a heat exchanger module, said module including

- An inlet header to direct a flow of said refrigerant into said module;
- an outer header to discharge said refrigerant from said module; and
- a plurality of heat exchange layers fluidly connecting said inlet to said outlet header to enable said refrigerant to flow from said inlet to said outlet header and/or vice versa; said layers being stacked one on top of the others and each layer including a plurality of channels; wherein said heat exchanger module includes at least a first, a second couple of adjacent exchange layers, one adjacent to the other along said stackwise direction;

the method including the steps of:

- measuring the spatial distribution of the flow rate of the process air flow in a portion of said air circuit where said module is located;
- determining regions of higher flow rate and lower flow rate of said process air around said module;
- connecting two adjacent heat exchange layers of said module with a plurality of fins having a pitch;
- selecting the pitch of said plurality of fins so that the higher the flow rate of the region between said two adjacent heat exchange layers connected by said plurality of fins, the lower the pitch of the plurality of fins located between the same two adjacent heat exchange layers.

In order to optimize the heat exchange, the spatial distribution of the process air within the air conduit is preferably studied, in particular the spatial distribution of the air flow in the proximity of the module to be hit by the same. From the distribution of the air flow, e.g., where the flow is more "intense" and where it is more "light", the module can be divided in different regions, region of "higher" air flow rate and region of "lower" flow rate, where the terms higher and lower are relative terms with reference to an "average" flow rate through the module.

The module geometry, with respect to prior art module, is then modified to take into account this uneven distribution of air flow, thus more heat exchange surface is located where the higher flow rate is present, e.g., more surface to exchange heat is arranged in those regions of higher flow rate.

This is done according to the invention either decreasing the pitch rate of the fins in those regions, or decreasing the distance among adjacent layers in those same regions. In the first case, the method of the invention includes to select the adjacent heat exchange layers belonging to the regions of higher flow rate and place among them pins having a rather "small" pitch, small again with respect to the other pitch used. Several different pitches could be used in the module used in the dryer of the invention, the higher the flow rate present in a given region of the module, the smaller the pitch of the fins present in the adjacent layers located in that same region. However, also only two different pitches could be used, one - the smaller - for the "high flow rate" regions, and one - the larger - for the "low flow rate" region. In the low flow rate region, on the contrary, the fins are less packed and a relatively large pitch is used. In the second case, according to the method of the invention, the adjacent heat exchange layers belonging to the regions of higher flow rate are selected and the distance along the stacking direction among them is so selected to be rather "small" pitch, small again with respect to the other distances in the same module among adjacent heat exchange layers. The distance can be gradually varied in the layers, from a small distance where the flow rate has a maximum, gradually varying to a larger distance where there is a minimum. However, also only two different distances could be used, one - the narrower - for the "high flow rate" regions, and one - the wider - for the "low flow rate" region.

According to an advantageous embodiment, the cross-section of said inlet and/or said outlet header and/or said intermediate header is oblong, wherein its smallest diameter is smaller than a width of said layer.

Preferably, the headers of the heat exchangers' modules are oblong, e.g., they have an oval or rectangular cross section, in order to further reduce the internal volume of the exchangers, reducing space, and also in order to save some refrigerant. The refrigerant is indeed relatively expensive and it is preferred to minimize the same for a given heat exchange capacity. Moreover, the exchange surface (e.g., the total surface of channels layers and fins) can be increased since the portion of the process air duct used to place the header is reduced, so the extension of the channels can be increased. In one direction, the minimum dimension of the cross section is fixed: it has to be wide enough to be connected to one end of the layer and thus it has to be at least as wide as the layer. In the perpendicular direction, however, the maximum width, or diameter, can be reduced below the layers' width.

More preferably, said cross section of said inlet and/or said outlet header and/or said intermediate header is oval or rectangular.

Advantageously, said channels have a hydraulic diameter smaller or equal than 5 mm.

According to an embodiment of the invention, the hydraulic diameter of each of the channel, where the hydraulic diameter $D_H$ is defined as

$$D_H = \frac{4A}{P}$$

where A is the cross sectional area of the channel and P is the wetted perimeter of the cross-section of the channel, is smaller or equal than 5 mm, i.e. $D_H \leq 5$ mm, more preferably $D_H \leq 3$ mm, even more preferably $D_H \leq 1$ mm.

Due to the size of the hydraulic diameter, the module of the invention may include many channels, therefore the refrigerant flow is divided in a plurality of smaller refrigerant streams, one per channel. In this way the pressure drop of the refrigerant within the channels is reduced compared to the refrigerant pressure drop in bigger channels.

Additionally, it is known that the maximum pressure that a pipe can withstand is inversely proportional to its hydraulic diameter. A small hydraulic diameter therefore means that the channels can withstand higher pressures than bigger pipes. For this reasons, high pressures refrigerants, such as carbon dioxide, can be used in the heat pump circuit of the dryer of the invention.

Moreover, still due to the smaller size, a smaller amount of refrigerant is needed for the proper functioning of the module than in standard heat pump dryers. Use of hydrocarbons, which are flammable, can be therefore also considered, due to the low amount required.

The shape of the cross section of the channels is not relevant for the present invention, and it can be squared, rectangular, circular (in this case the hydraulic diameter coincide with the diameter of the circle), elliptic, and so on. The cross section of the plurality of channels does not have to be the same for all channels in the plurality, but it can be different and the various channels can have a combination of the possible above listed cross sections. In addition, the cross section may vary both in hydraulic diameter and/or in shape along the extension of the channel.

Preferably, said heat exchange layer includes a plurality of channels one parallel to the others.

Preferably, the channels extend along a direction which is substantially parallel to the horizontal plane and also perpendicular to the flow of the process air stream when the dryer is functioning. In other words, the channels, which preferably have a diameter much smaller than their length, extend from the first to the second header in such a way that their longitudinal extension results substantially parallel to the horizontal plane and perpendicular to the flow of process air with which the heat exchange takes place.

In case the channels are rectilinear, their longitudinal extension (and longitudinal direction) corresponds to their longitudinal axis. In case the channels are not rectilinear, for example they are forming an arch, their longitudinal extension (and longitudinal direction) corresponds to the line joining the point from which they depart from the inlet/outlet header and the first point having the maximum distance from the inlet/outlet header longitudinal axis.

The channels may include rectilinear portions and/or bumps or other turbulence-inducing elements that may enhance the heat transfer between the refrigerant and the air process stream. Additionally, channels may include smooth or corrugated inner and/or outer surfaces and may comprise bends or curves.

In a preferred embodiment of the invention, the channels are rectilinear. In an additional embodiment of the invention, the channels include a plurality of rectilinear portions connected to each other via U-bends. In this latter embodiment, the rectilinear portions are preferably stacked one on top of the other in a vertical direction. According to a different embodiment of the invention, the rectilinear portions are coplanar, more preferably in a plane parallel to the horizontal plane. According to a further embodiment, the channels are bended forming an arch, their longitudinal extension being preferably still perpendicular to the process air flow. This latter embodiment is used in particular to place the module of the dryer of the invention in the most suitable location within the process air conduit. Indeed, it is known that there are portions of the process air conduit in which the process air flow is more uniform and less turbulent. Heat exchange between the process air flow and the refrigerant is therefore optimal in these locations. An arched channel allows the positioning of the module also in locations in which other objects are present or narrow thus in general to better exploit the available space and/or to reduce the limitations given by a not even distribution of the air flow.

Advantageously, said first heat exchanger includes more heat exchanger modules that said second heat exchanger.

Brief description of the drawings

These features and advantages of the invention will better appear from the following description of some exemplary and non-limitative embodiments, to be read with reference to the attached drawings, wherein:

- Fig. 1 is a schematic view, where some elements have been removed for clarity, of a laundry dryer according to the invention;

- Fig. 2 is a perspective view of a portion of an embodiment of the dryer of the invention of fig. 1 with the casing removed;

- Fig. 3 is a perspective view in section of an element of the dryer of fig. 1;

- Figs. 4a and 4b are a schematic front view and top view, respectively, of an embodiment of the heat exchanger module of the dryer of the invention of fig. 1;

- Figs. 5a and 5b are a schematic front view and top view, respectively, of a further additional embodiment of the heat exchanger module of the dryer of the invention of fig. 1;

- Figs. 6a and 6b are a schematic front view and top view, respectively, of an embodiment of connection between two heat exchanger modules of any of the examples of figs. 4a-4b to figs. 5a-5b;

- Figs. 7a and 7b are a schematic lateral view of a module of a prior art laundry dryer and of a laundry dryer of the present invention, respectively, according to a preferred embodiment of the invention;

- Figs. 8a and 8b are a schematic lateral view of a module of a prior art laundry dryer and of a laundry dryer of the present invention of fig. 1, respectively, according to an additional preferred embodiment of the invention;

- Figs. 9a, 9b and 9c are two schematic lateral views of a heat exchange module of the laundry dryer of the present invention of fig. 1, and of an enlarged detail thereof, respectively, with reference to a step of the method of the invention;

- Figs. 10a, 10b are two schematic lateral views of a heat exchange module of the laundry dryer of the present invention of fig. 1, with reference to a step of the method of the invention according to a different embodiment;

- Figs. 11a, 11b and 11c are schematic front view of three different embodiments of a heat exchanger module used in the laundry dryer of the invention of fig. 1; and

- Fig. 12 is a schematic lateral cross section of a heat exchanger module used in the laundry dryer of the invention of fig. 1.

Detailed description of the preferred embodiments of the invention

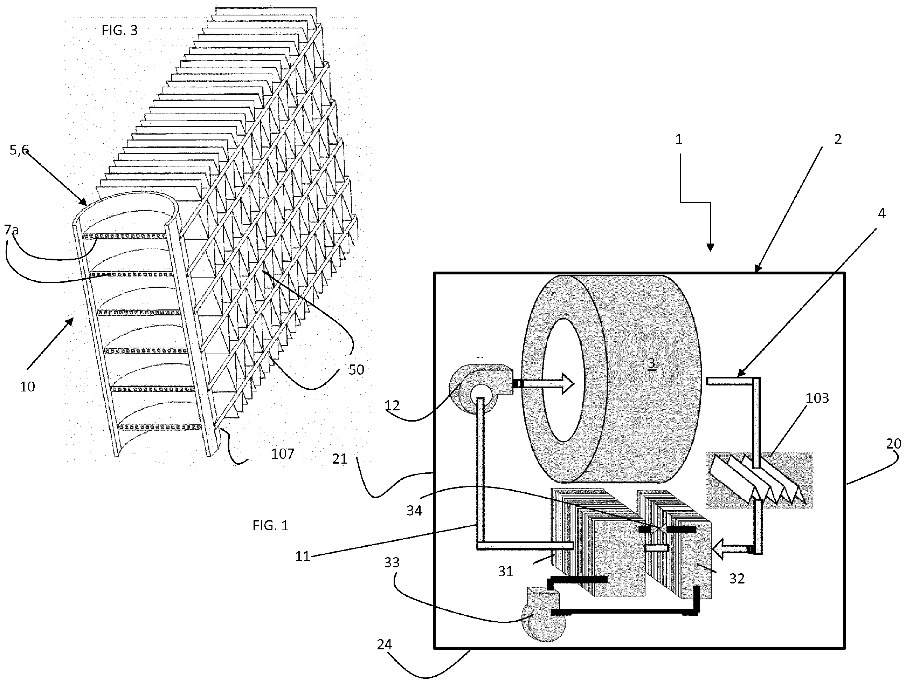

With initial reference to fig. 1, a laundry dryer realized according to the present invention is globally indicated with 1.

Laundry dryer 1 comprises an outer box casing 2, preferably but not necessarily parallelepiped-shaped, and a drying chamber, such as a drum 3, for example having the shape of a hollow cylinder, for housing the laundry and in general the clothes and garments to be dried. The drum 3 is preferably rotatably fixed to the casing, so that it can rotates around a preferably horizontal axis (in alternative embodiments, rotation axis may be vertical or tilted). Access to the drum 3 is achieved for example via a door, preferably hinged to casing, which can open and close an opening realized on the casing itself.

More in detail, casing 2 generally includes a front panel 20, a rear wall panel 21 and two sidewall panel all mounted on a basement 24. Panels 20, 21 and basement 24 can be of any suitable material. Preferably, the basement 24 is realized in plastic material. Preferably, basement 24 is molded.

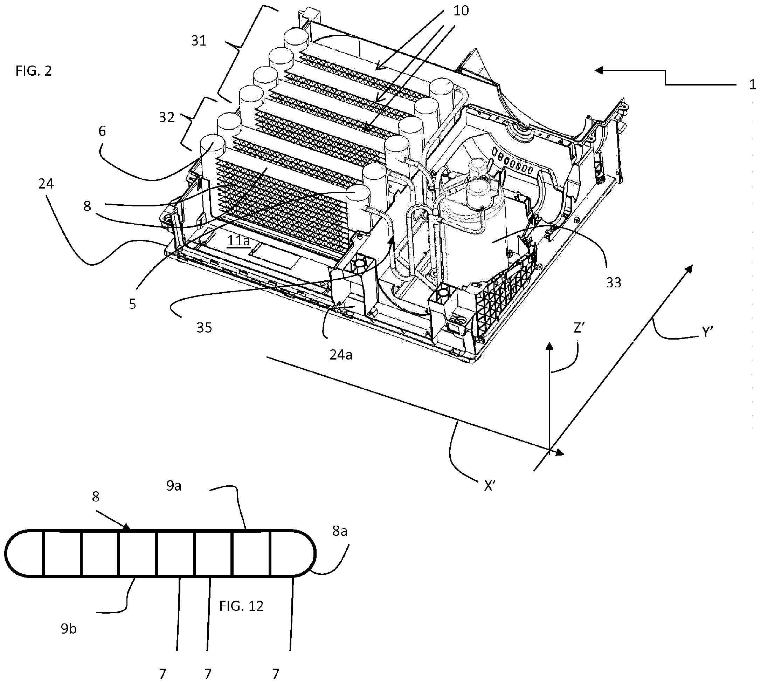

Preferably, basement 24 includes an upper and a lower shell (in fig. 2 only the lower shell 24a is visible).

The dryer 1 defines an horizontal plane (X',Y') which is substantially the plane of the ground on which the dryer is situated, and a vertical direction Z' perpendicular to the plane (X',Y').

Laundry dryer 1 also comprises an electrical motor assembly (not shown in the pictures) for rotating, on command, revolving drum 3 along its axis inside casing. Casing 2, revolving drum 3, door and motor are common parts in the technical field and are considered to be known; therefore they will not be described in details.

Dryer 1 additionally includes a process air circuit 4 which comprises the drum 3 and an air process conduit 11, schematically depicted in fig. 1 as a plurality of arrows showing the path flow of a process air stream through the dryer 1. In the basement 24, air process conduit 11 includes an air duct 11a which is formed by the connection of the two upper and lower shells 24a. Air process conduit 11 is preferably connected with its opposite ends to two opposite sides of drum 3. Process air circuit 4 may also include a fan or blower 12 (see fig. 1) and an electrical heater (not shown in the figures).

The air duct 11a can be integral with the basement 24 as depicted in fig. 2, or it can be a different element attached to the same. Moreover, the air duct 11a can be located not only in the basement 24, but also in correspondence of a top or lateral part within the casing 2 of the laundry dryer 1.

The dryer 1 of the invention additionally comprises a heat pump 30 including a first heat exchanger called also condenser 31 and a second heat exchanger called also evaporator 32. Heat pump 30 also includes a refrigerant closed circuit (schematically depicted in the picture with lines connecting the first to the second heat exchanger and vice versa, see in detail fig. 1) in which a refrigerant fluid flows, when the dryer 1 is in operation, cools off and may condense in correspondence of the condenser 31, releasing heat, and warms up, potentially even evaporating, in correspondence of the second heat exchanger (evaporator) 32, absorbing heat. Alternatively, no phase transition takes place in the condenser and/or evaporator, which indicates in this case respectively a gas heater and gas cooler, the refrigerant cools off or it warms up, respectively, without condensation or evaporation. In the following the heat exchangers are named either condenser and evaporator or first and second heat exchanger, respectively.

More in detail, the heat pump circuit connects via piping 35 (visible in fig. 2) the second heat exchanger 32 where the refrigerant warms up and may undergo a phase transition from the liquid to the vapor via a compressor 33 to the first heat exchanger 31, in which the refrigerant cools off and may condense again. The cooled or condensed refrigerant arrives via an expansion device 34, such as a choke, a valve or a capillary tube, back at the evaporator 32.

The condenser 31 and the evaporator 32 of the heat pump 30 are located in correspondence of the process air conduit 11. More preferably, they are located in correspondence of the air duct 11a of basement 24, at least partially.

In the case of the invention using a a condense dryer - as depicted in fig. 1 - where the air process circuit 4 is a closed loop circuit, the condenser 31 is located downstream of the evaporator 32. The air exiting the drum 3 enters the conduit 11 and reaches the evaporator 32 which cools down and dehumidifies the process air. The dry cool process air continues to flow through the conduit 11 till it enters the condenser 31, where it is warmed up by the heat pump 30 before re-entering the drum 3.

A lint filter 103 to block the lint is preferably present in the dryer 1. The lint filter 103 is preferably located before the process air reaches the evaporator 32, e. g. when it exits the drum 3.

First and/or second heat exchanger 31, 32 further include - according to a characteristic of the invention - one or more heat exchanger modules 10 located along the process air conduit 11. In particular, the first and the second heat exchangers 31 and 32 are located in the air duct 11a. Thus the preferred location of the air duct 11a within the casing 2 is a volume of the same where enough space is available to host the modules 10.

With now reference to fig. 2, the basement 24 of a dryer 1 showing a plurality of modules 10 included in the evaporator 32 and in the condenser 31 of the heat pump 30 according to the invention is depicted. In the mentioned figures, the casing 2 and the drum 3 of the dryer 1 have been removed in order to show the heat exchangers located along the process air conduit 11, more specifically in air duct 11a. As stated above, although in the appended drawings both evaporator 32 and condenser 31 of the dryer 1 includes heat exchanger modules 10, it is to be understood that the evaporator 32 only or the condenser 31 only might include such module(s) 10. In addition, a single module 10 can be included in either evaporator 32 or condenser 31. Moreover, in case both evaporator and condenser include more than one module 10 according to the invention, the evaporator can include a different number of modules from the condenser (as per the appended figure 2 where the evaporator 32 includes two modules 10 and the condenser four modules 10). Preferably, the condenser 31 includes more modules than the evaporator 31. In case more than one module is included, the modules can be identical or different.

The structure of a single module 10 will be now be described, with reference to the different embodiments depicted in fig. 3, from 4a-4b to 5a-5b and 11a-11c.

A heat exchanger module 10 includes an inlet header 5 and an outlet header 6. Inlet and outlet headers 5,6 have preferably the structure of a pipe. The headers have a longitudinal extension along an axis, which corresponds to the main direction of flow of the refrigerant within the headers. The refrigerant is flowing into the module 10 via the inlet header 5 and exiting the same via the outlet header 6. A plurality of channels, each indicated with 7, is fluidly connecting the inlet to the outlet header and vice versa, so that the refrigerant can enter and exit the module, the plurality of channels being subject to the flow of process air, i.e., channels 7 are located within the air duct 11a of the dryer 1. The channels 7, due to their configuration, allow a better heat exchange between the refrigerant and the process air than known dryers.

Channel 7 defines a longitudinal direction X along which it extends, which correspond to the longitudinal extension of the heat exchange layer 8. Preferably, the channels 7 are mounted in the module 10 so that their longitudinal extension X is substantially perpendicular to a process air flow direction and substantially parallel to the horizontal plane. In other words preferably, when mounted, the longitudinal direction X lies on a plane parallel to the (X',Y') plane defined by the dryer 1.

Preferably, the refrigerant flow within channels 7 is substantially perpendicular to the process air flow. However, depending on the direction of the process air flow, the direction of the process air stream and the direction of the refrigerant flow can form an angle therebetween.

The channels 7 are grouped in heat exchange layers 8: each heat exchange layer includes a plurality of channels 7 which are preferably adjacent and parallel to each other. More preferably, each module 10 includes a plurality of heat exchange layers 8, more preferably all layers 8 are stacked one on top of the other in a stackwise direction Z and even more preferably parallel to each other, substantially forming a plurality of parallel rows. Preferably the stackwise direction is the vertical direction, i.e., Z and Z' are parallel to each other.

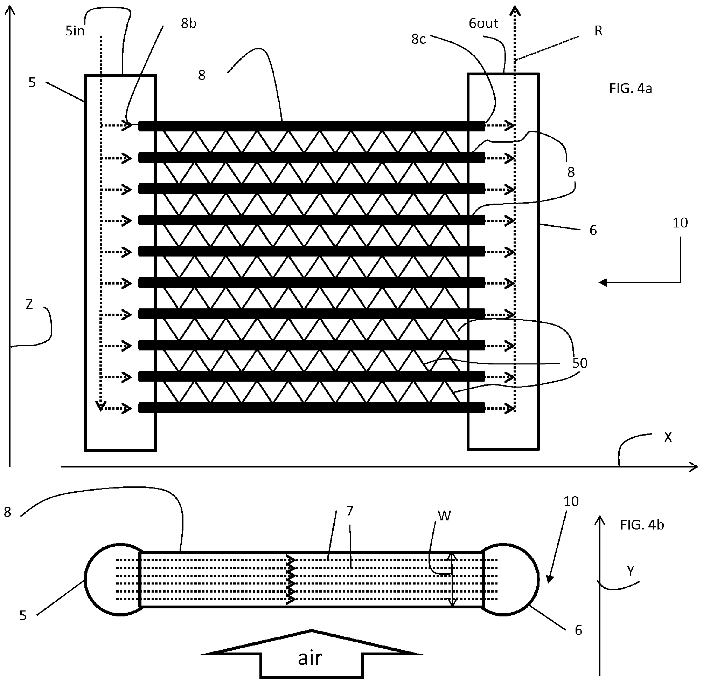

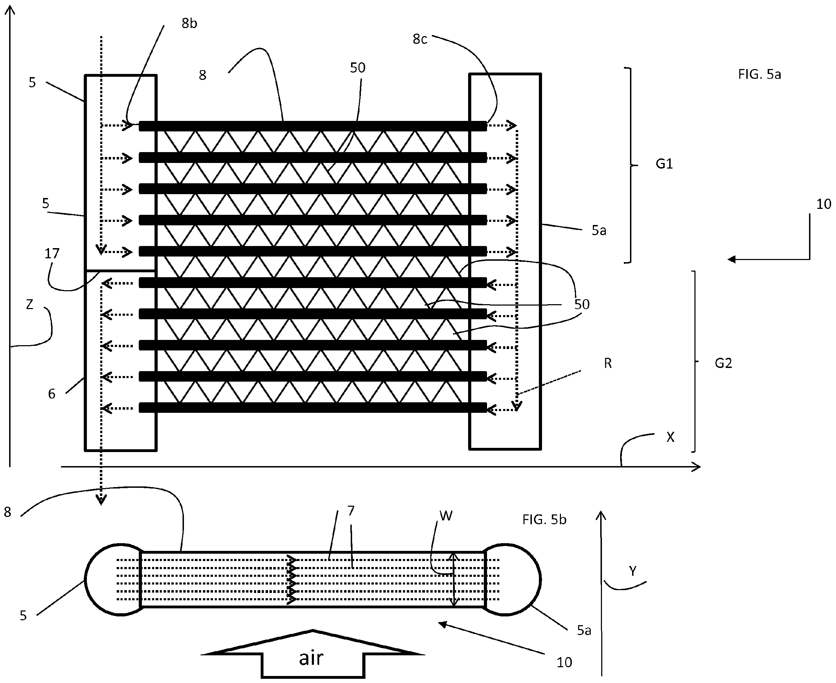

According to an embodiment of the invention, heat exchange layer 8 includes a single tube, having for example an elongated cross section, including two substantially parallel flat surfaces 9a,9b. Within the tube, separators 8a are realized in order to longitudinally divide the interior of the tube in the plurality of channels 7. Such a structure is schematically depicted in the cross section of a heat exchange layer 8 of fig. 12. The cross section of the single channel 7 can be arbitrary. Each heat exchange layer 8 has a width W which depends on the number of channels which are located one adjacent to the other (see figures 4b and 5b).

Preferably, each couple of adjacent stacked heat exchange layers 8 is connected via a plurality of fins 50. Preferably the upper surface 9a of a heat exchange layer 8 is connected via the plurality of fins 50 to the lower surface 9b of the adjacent heat exchange layer 8 (see fig. 12).

The width W of the layer 8 defines a direction Y which, together with the longitudinal direction X of channels 7 defines a heat exchange layer plane (X,Y). The heat exchange layer plane (X,Y) might be, when the module is mounted on the dryer, either parallel to the horizontal plane (X',Y') defined by the dryer 1 or tilted with respect to the same. Alternatively or in addition, the heat exchange layer plane (X,Y) can be perpendicular to the stackwise direction Z or form an angle with the same. Moreover, each heat exchange layer 8 can also be not planar, but for example curved, e.g., having a concavity pointing either up or down along the stackwise direction.

As an example, in fig. 3 a section of a header 5,6 is represented. The header 5,6 includes a cylindrical envelope 107 in which a plurality of holes 7a are realized, the channels 7 forming the heat exchange layer 8 being inserted therein. However different configurations are possible.

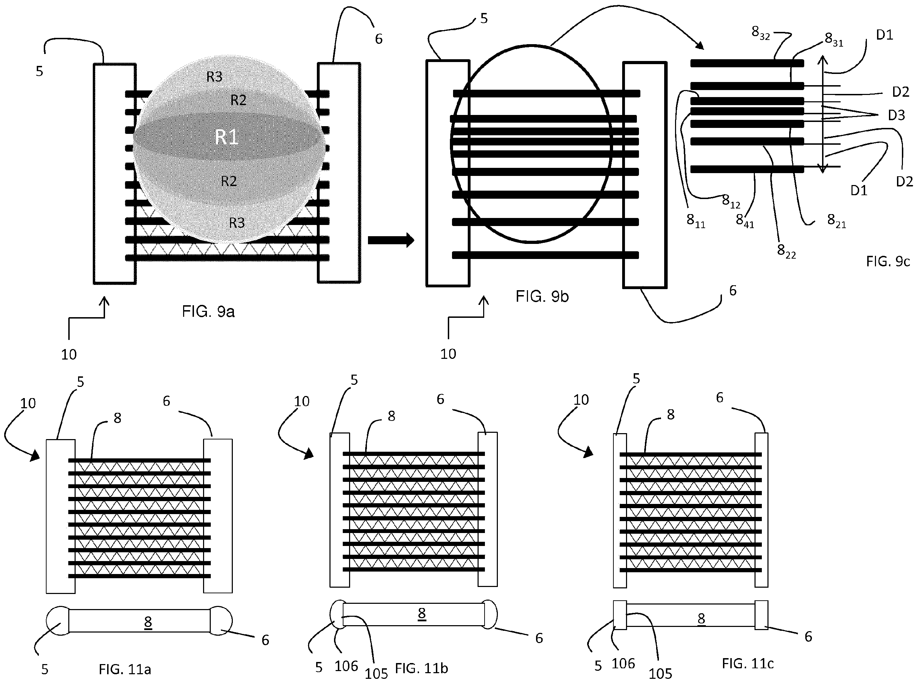

In an embodiment, visualized in figs. 11a-11c, the cross section of the headers 5,6 is circular, or preferably oblong. The cross section of the header refers to the cross section of the header along a plane perpendicular to the stackwise direction Z. Preferably, the oblong cross section is such that its smallest diameter, i.e., the smallest cord passing through the geometrical center of the cross section, is smaller than the width W of the layer 8. In this way, as shown in the figures 11b and 11c, the cross section includes a "long side" 105 on which the heat exchange layer's 8 end can attach, and which has to have at least a width equal to (or longer than) W, and a "shorter side" 106 realized in order to minimize space. In fig. 11b the cross section of the header 5,6 is an oval, in figure 11c a rectangle. However, a single module 10 may also include a header 5,6 having a given cross section and the other header 5,6 having a different cross section.

The refrigerant entering the module 10 via the inlet header 5 can come from the outlet header 6 of another module 10, from the compressor 33 or from the expansion valve 34. Additionally, the refrigerant exiting the outlet may be directed towards the inlet header 6 of another module 10, towards the capillary tube 34 or towards the compressor 33. The connection between the compressor 33, modules 10 and capillary tube 34 (not depicted) and between modules is made via piping 35, as it can be seen in figure 2. In the following figures, the flow of the refrigerant R will be indicated with a dotted line having a pointing arrow in the direction of the flow.

The heat exchange layers 8 includes two opposite ends 8b,8c. In some embodiments, one end 8b is connected to the inlet header 5 and the opposite end 8c is connected to the outlet header 6. Alternatively, an additional intermediate header can be present, as detailed below.

According to a first specific embodiment of the module 10 of the dryer 1 of the invention depicted in figs. 4a and 4b, the two headers 5,6 are mounted vertically (i.e. their axis Z is the vertical axis Z' of the dryer 1) on the basement 24 of the dryer 1, parallel one to the other, and the channels 7 connecting the two headers 5,6 are substantially straight along the longitudinal direction X. Channels 7 are divided in heat exchange layers 8, each of which includes a different tube defining upper and lower surfaces 9a,9b (see fig. 12) within which the channels 7 are realized. A plurality of heat exchange layers 8 connects the inlet 5 to the outlet header 6, all heat exchange layers having a first end 8b and a second end 8c longitudinally opposite to each other, the first end being connected to the inlet header and the second end being connected to the outer header. Heat exchange layers are stacked one on the other along the vertical direction forming a plane (Z,X) defined by the longitudinal extension X of the channels 7 and the direction of stacking Z. This plane is perpendicular to the horizontal plane (X',Y') and to direction of flow of process air as clear from figs. 4a, 4b. In addition, each heat exchange layer has a width direction Y perpendicular to the longitudinal extension X of the channels 7. In the present embodiment, this width direction Y is parallel to the horizontal plane (X',Y') and the air flow direction; i.e. the layer planes (X,Y) are horizontal (parallel to the horizontal plane (X',Y')). In other words, the module 10 is mounted so that the heat exchange layers 8 form parallel planes between which the process air flows. In each header 5,6 in correspondence of each heat exchange layer's end 8b,8c, a plurality of apertures 7a is realized, in each aperture 7a a channel 7 being inserted. The so-formed rows of apertures 7a (see fig. 3) are parallel one to the other and perpendicular to the longitudinal extension Z of the header 5,6.

The refrigerant enters the inlet header 5 of module 10 via an inlet aperture 5in along a flow direction parallel to the longitudinal extension Z of header 5 and branches off into the various channels 7 via apertures 7a. The heat exchange layers 8 are "parallel" to each other according to the refrigerant flow direction. In each channel 7, the flow of the refrigerant is substantially parallel to the flow direction of the refrigerant in the other channels and has the same direction. The refrigerant then exits the module via an outlet aperture 6out of outlet header 6.

The direction of flow of refrigerant in the headers 5,6 is perpendicular to the process air flow. In addition, the flow of the refrigerant in the inlet header is parallel to the flow of the refrigerant in the outlet header, but with opposite direction.

In a different embodiment, not depicted, the refrigerant flow in the inlet and in the outlet header can also be parallel and have the same direction.

According to another embodiment of the module 10 of the present invention, depicted in figs. 5a and 5b, one of the two headers includes a transversal separator 17 which divides the header in two separated portions. In other words, there are still two parallel vertical headers connected by parallel heat exchange layers 8, but one of the layers is divided in two and the first portion represents the inlet header 5, while the second portion is the outlet header 6. The second header 5a is an intermediate header for the refrigerant flow. The flow of refrigerant entering the header 5 is therefore prevented by separator 17 to go from the inlet to the outlet header. The heat exchange layers 8 are thus divided in two groups: the first group G1 connects the first portion 5 (the inlet header 5) to the intermediate header 5a and the second group G2 connects the intermediate header 5a to the second portion (outlet header 6).

The refrigerant flow which enters the first portion 5 (the inlet header 5) in a vertical Z direction is distributed via apertures 7a into the first group G1 of heat exchange layers 8 and the refrigerant flows within the parallel channels in the first group G1 towards the intermediate header 5a. Therefore, the layers within the first group G1 are parallel with respect to the refrigerant flow. The refrigerant streams exit the first group G1 of heat exchange layers 8 and enter the intermediate header 5a, where they merge. From the intermediate header 5a, the refrigerant flow then enters the second group G2 of heat exchange layers 8 reaching the outlet header 6. Thus, also the heat exchange layers within the second group G2 are parallel to each other with respect to the refrigerant flow. However the layers of the two groups G1, G2 are in series with respect to the refrigerant flow. Indeed, the refrigerant flows in parallel in all heat exchange layers belonging to the same group, while it has to flow through the heat exchange layers of first and the second group in a given order - the layers of the two groups being thus in series.

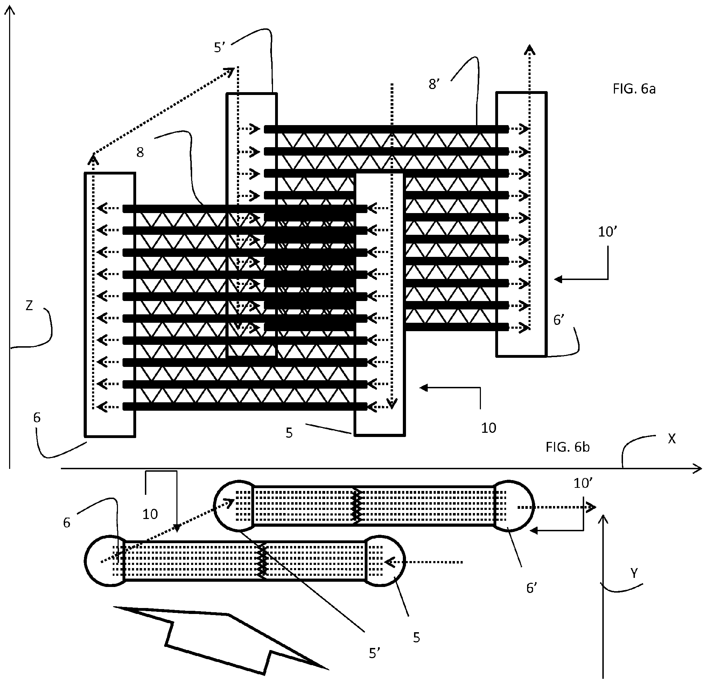

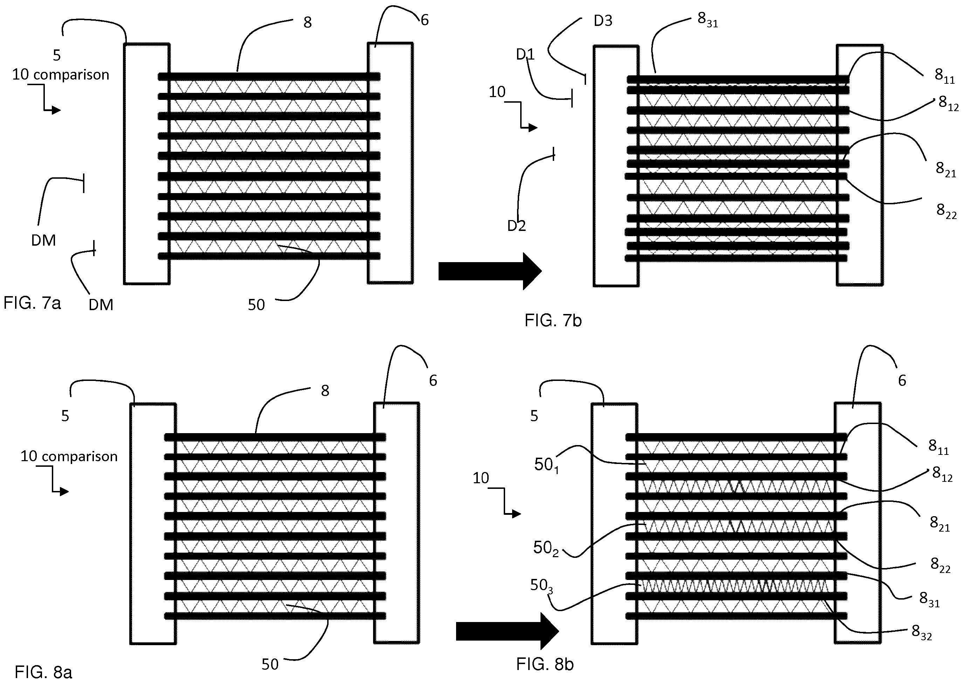

The connection between modules can be made according to the invention as follows. Referring to figs. 6a and 6b, a first and a second module 10, 10' are connected to each other. This two modules can for example both belong to the condenser 31, as depicted in the schematic drawings of figs. 7b and 8b. The two modules are realized parallel one to the other and one in front of the other in the direction of flow of the process air, both substantially perpendicular to the horizontal plane. Both modules have heat exchange layers 8,8' which are parallel to the horizontal plane. The refrigerant flow enters the inlet header 5 of the first module 10, it divides within the plurality of channels 7 and the various streams merges in the outlet header 6. The refrigerant exits the first module 10 via the outlet header 6, thus entering the inlet header 5' of the second module 10'. In the second module 10', again the refrigerant flow travels through the plurality of channels 7' and exits the second module via the outlet header 6' of the second module. In this case, therefore, the modules 10,10' are in series with respect to the process air flow and in series with respect to the refrigerant flow.

Alternatively, many other different connections can be realized.

With now reference to figs. 7b and 8b, the module 10 of either the first and/or the second heat exchanger 31,32 of the laundry dryer of the invention in addition includes a variable fins' pitch (fig. 8b) or a variable distance among adjacent heat exchange layers (fig. 7b). The two embodiments will be described separately in the following.

The module 10 located in the air conduit 11, and more precisely in the air duct 11as, is hit by the process air in order to exchange heat with the same. The heat is exchanged in particular with reference to the external surfaces of the heat exchange layers 9a,9b (such as those depicted in fig. 12) and to the fins, when present, connecting the adjacent layers. The process air flowing in the air conduit and hitting the module is preferably blown by the fan 12, which can be located within the air circuit 11.

The fan can be positioned centered with respect to the cross-section of the air circuit 11 or off-center. Moreover, the fan can be located between the condenser and the drying chamber (e.g., at the exit of the condenser before the process air re-enters the drying chamber) or between the drying chamber and the evaporator (e.g., it blows the humid process air exiting the drying chamber before it enters the evaporator).

For comparison, in fig. 7a a module $10_{comparison}$ having a plurality of heat exchange layers 8 one stacked on top of the other, in this figure the stacking direction is the vertical direction, having a constant distance among the different layers is shown. In this module, the distance among two adjacent layers is substantially constant, i.e., any couple of adjacent heat exchange layers which can be selected among the plurality of heat exchange layers present in the module shows a distance among them which is substantially the same as the distance among any other possibly selected couple of adjacent heat exchange layers in the same module $10_{comparison}$. The distance is calculated along the stacking direction that in this embodiment is the vertical direction Z. In the following, the terms "upper" and "lower" will be used with reference to the stacking direction, regardless whether this coincides with the vertical direction. For example, the distance can be calculated as the distance present between the upper surface 9a of the lower layer of a selected couple and the lower surface 9b of the adjacent upper layer of the same couple. In case the heat exchange layers are not parallel one to the other(s) as in the depicted embodiment, but they are angled one with respect to the other(s), the distance between a couple of adjacent heat exchange layers is calculated as the average distance among the two adjacent layers. The substantially constant distance in the module $10_{prior}$ art of fig. 7a is called in the following $D_M$.

In fig. 7b, a module 10 having a variable distance is shown. In this module 10, the heat exchange layers 8 are also parallel one to the other(s), however selecting a given couple of adjacent layers, the distance among them is not always the same as the distance among two adjacent heat exchange layers of a different couple. There could be couples of adjacent heat exchange layers which have the same distance among them, however according to the invention there is at least a first and a second couple of heat exchange layers adjacent to each other that have different distances. For example, with reference to the figure 7b, the module 10 includes a first couple of adjacent layers $8_{11}$ and $8_{12}$ which are separated by a first distance $D_1$, and a second couple of adjacent layers $8_{21}$ and $8_{22}$ which are separated by a second distance $D_2$ which is different than $D_1$. In this example, $D_1 > D_2$. In the module 10, there can be also additional different distances, for example in this case taking a third couple formed by the adjacent heat exchange layers $8_{31}$ and $8_{11}$, they are separated by a third distance $D_3$ which is different from both $D_1$ and $D_2$ and in this case is $D_1 > D_2 > D_3$. In a preferred embodiment, fins 50 can be interposed among the adjacent heat exchange layers $8_{11}$ and $8_{12}$, $8_{21}$ and $8_{22}$, $8_{31}$ and $8_{11}$ The height of the fins changes according to the distance among the adjacent heat exchange layers.

With now reference to fig. 8a, a module 10$_{comparison}$ analog to module depicted in fig. 7a is shown. The module 10 has a plurality of layers 8 one stacked on top of the other, in this figure the stacking direction is the vertical direction, having a constant fins' pitch. In this module, any couple of adjacent heat exchange layers which can be selected among the plurality of heat exchange layers present in the module includes therebetween a plurality of fins 50. The pitch of the fins present between this selected couple of adjacent layers is substantially the same as the pitch of the fins located between any other possibly selected couple of adjacent heat exchange layers in the same module 10 $_{comparison}$. Fins can be present among adjacent layers which are not only parallel to each other(s) but also when they are angled one with respect to the other(s). In fig. 8a the substantially constant pitch of the fins 50 throughout the module is called in the following $P_M$.

In fig. 8b, a module 10 having a variable pitch is shown. In this module 10, the heat exchange layers 8 are also parallel one to the other(s) with a plurality of fins 50 therebetween, however selecting a given couple of adjacent heat exchange layers, the pitch of the plurality of fins disposed among them is not always the same as the pitch of fins present among two adjacent heat exchange layers of a different couple. There could be couples of adjacent heat exchange layers which have fins having the same pitch among them, however according to the invention there is at least a first and a second couple of heat exchange layers adjacent to each other that have fins with different pitches. For example, with reference to fig. 8b, a first couple of adjacent layers $8_{11}$ and $8_{12}$ are separated by a first plurality of fins $50_1$ having a first pitch $P_1$, while a second couple of adjacent layers $8_{21}$ and $8_{22}$ are separated by a second plurality of fins $50_2$ having a second pitch $P_2$ which is different than $P_1$. In this example, $P_1 > P_2$. In the module 10, there can be also additional different pitches, for example in this case taking a third couple formed by the adjacent heat exchange layers $8_{31}$ and $8_{32}$, they are separated by a third plurality of fins $50_3$ having a third pitch $P_3$ which is different from $P_1$ and $P_2$ and in this case is $P_1 > P_2 > P_3$. As it is also clear from the figure, the smaller the pitch, the more densely packed the fins are.

It is to be understood that although in the depicted drawings fins are present among each couple of adjacent heat exchange layers, fins can be present only among selected couples of adjacent heat exchange layers. Moreover, fins can be present also among non-parallel adjacent heat exchange4 layers.

A combination of figs. 8b and 7b is possible as well, in other words according to the invention also a module 10 having a variable pitch of the fins and a variable distance among adjacent heat exchange layers is envisaged as well (embodiment not shown in the appended drawings).

Although in the drawings 2, 3, 4a-4b, 5a-5b, 6a-6b, 11a-11c, the layers and the fins of the depicted modules 10, 10' appear to have a constant pitch/distance, this is only for drawings' clarity and simplification, in any of the mentioned drawings modules 10, 10' realized according to embodiment of fig. 7b and/or 8b are employed according to the present invention.

Moreover, in case the first and/or the second heat exchanger 31, 32 includes more than one module according to the embodiment of fig. 7b or fig. 8b, the distance/pitch of the fins selected among the various couples of adjacent layers of one module can be the same or can be different than the distance/pitch of the fins among the various couples of adjacent layers of another module belonging to the same heat exchanger. In addition the module(s) belonging to the first heat exchanger does not have to be identical (e.g., with the same pitch and/or distance among adjacent heat exchange layers) to the module(s) belonging to the second heat exchanger.

In case more than one module 10 according to the invention is present within the air conduit 11, as depicted for example in fig. 2, the process air flowing in the air conduit 11 hits the various modules one after the other. Therefore, the distribution in the space of the process air downstream the first hit module is different than the distribution of process air upstream the same module, due to the fact that the module itself, and in particular the variable pitch of the fins and/or the variable distance among adjacent heat exchange layers, has modified the process air flow. For this reason, the geometry of the module downstream another module can be different than the geometry of the first hit module. This reasoning is applicable to all modules present in a laundry dryer 1. Thus, the distances and/or the pitches selected for a module are preferably changed in a different module upstream or downstream the first considered one, due to the change in spatial distribution of the process air flow within the air conduit where the heat exchangers are located.

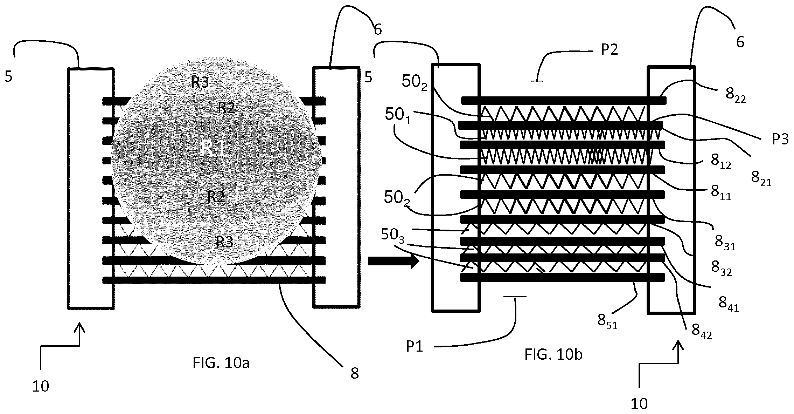

With now reference to figs. 9a-9c and 10a-10b, the method according to the invention to improve the efficiency in heat exchange of the laundry dryer 1 is described.

In order to select the correct pitch for the fins or the correct distance among the adjacent heat exchange layers in the module of the invention, the following steps are preferably taken.

With reference to figs. 9a-9c, the method of the invention includes the selection of the distances among the adjacent heat exchange layers.

In proximity of the module of which the distances among the various adjacent heat exchange layers are to be calculated, the spatial distribution of the process air flow impinging the same is calculated. This calculation can also be made before the modules are even mounted, due to the fact that it mainly depends on the air circuit geometry and on the fan 12 location. In case other elements are present upstream of the module, such as other modules, the calculation has to be repeated taking into account the element's presence. Making this calculation means to determine whether the air flow is more or less uniform and where the major differences are present. Preferably, the calculation is made with respect to the calculation of the flow rate traversing a section of the air conduit substantially just upstream of the module in issue. If it is found that the air flow is substantially uniform, then a module such as the one depicted in fig. 7a or 8a is used. Otherwise, if the air flow is found to be non-uniform, than a variable distance module is selected as per fig. 7b. In order to determine the correct distance among the various adjacent heat exchange layers of the module in order to optimize heat exchange with a non-uniform air flow, regions of higher flow rate and lower flow rate around the module are determined, in other words it is checked where the process air flow is stronger and where it is weaker. The regions so determined are depicted in fig. 9a with different gray shades: the darker the color, the greater the flow rate. In the preferred example, three different flow rates have been detected, one present in a single region and the others present in two regions each. This in turn implies that the modules in various regions accordingly, one most intense region R1 having the highest flow rate, two region having a flow rate R2 and two regions having a flow rate R3, where R1 has a flow rate higher than R2 which in turn has a higher flow rate than in R3. The number of regions in which the module can be divided depends, among others, on the minim variation of flow rate considered to be sufficient to determine a new region, so that a more coarse grained or detailed subdivision of the module can be made depending on the type and application of the dryer.

Thus, as visible in fig. 9a, for example, in this case the process air flow is substantially concentrated on the top of the module and in particular is hitting few heat exchange layers, being very weak in other regions of the module.

In order to optimize the heat exchange, therefore, the available heat exchange surface should be preferably located where most of the process air is flowing, e.g., where the darkest region has been identified which is the region of highest flow rate. In this region, the smallest distance among adjacent heat exchange layers is preferably selected according to the invention, so that most of the surface per $cm^3$ in which heat exchange can take place is located in this region. In the other lighter colored regions, the distance may preferably increase with the decrease in flow rate. Preferably, the lower the flow rate, the greater is the selected distance between two adjacent heat exchange layers.

As visible in fig. 9b and in particular on the portion of fig. 9b reproduced in enlarged form as fig. 9c where the fins have been removed for clarity purposes, the distances have been selected in the following way. The region R1 covers a first couple of adjacent layers $8_{11}$ and $8_{12}$ and a second couple of adjacent layers $8_{12}$ and $8_{21}$. The adjacent heat exchange layers of these first and second couple are separated by a distance D3, which is the smallest distance selected for this module. Moreover, for the regions R2, having an "intermediate" flow rate, the heat exchange layers present in this region, i.e., a third couple of layers $8_{21}$ and $8_{22}$ and a fourth couple of adjacent layers $8_{11}$ and $8_{31}$, are separated by a distance D2. Being the flow rate lower in R2 than in R1, a less wide total surface for $cm^3$ is needed, and thus D2 < D1. When it comes to the third regions R3, again the adjacent layers present in this region, namely a fifth couple of adjacent layers $8_{31}$ and $8_{32}$ and a sixth couple of adjacent layers $8_{22}$ and $8_{41}$ are separated by a distance D1. The relationship among the various distances is that D3 < D2 < D1.

Preferably, 5 mm < D1,D2,D3 < 20 mm.

Alternatively or in addition, the selection of the different pitches of the fins, with now reference to figs. 10a and 10b, is made.

As already detailed above with reference to fig. 9a, in proximity of the module of which the pitches of the fins interposed among the various adjacent heat exchange layers are to be calculated, the spatial distribution of the process air flow impinging is calculated. The calculation is made as detailed above with reference to figs. 9a-9c. If it is found that the air flow is substantially uniform, then a module such as the one depicted in fig. 7a or 8a is used, e.g., a fins' pitch substantially constant and equal to $P_M$ is employed in the module. Otherwise, if the air flow is found to be non-uniform, then a variable pitch is selected. The flow can be non-uniform due to the geometry of the conduit and/or to the location and/or functioning of the fan 12. In order to determine the correct pitch of the fins located among the various adjacent heat exchange layers of the module in order to optimize heat exchange with a non-uniform air flow, the regions of higher flow rate and lower flow rate around the module are determined, in other words it is checked where the process air flow is stronger and where it is weaker, as calculated with reference to figs. 9a. The regions so determined are depicted in fig. 10a with different gray shades: the darker the color, the greater the flow rate. In the preferred example, three different flow rates have been detected, dividing the modules in five regions. One most intense region R1 having the highest flow rate is present, two region having an "intermediate" flow rate R2 and two regions having a low flow rate R3, e.g., flow rate in R1 > flow rate in R2 > flow rate in R1. The number of regions in which the module can be divided depends, among others, on the minim variation of flow rate considered to be sufficient to change region, so that a more coarse grained or detailed subdivision can be made depending on the type and application of the dryer.

Thus, as visible in fig. 10a, for example, in this case the process air flow is substantially concentrated on the top of the module and in particular is hitting few heat exchange layers, being very weak in other regions of the module.

In order to optimize the heat exchange, therefore, the available heat exchange surface should be preferably located where most of the process air is flowing, e.g., where the darkest region has been identified which is the region of highest flow rate. In this region, the smallest pitch may be preferably selected according to the invention, so that most of the surface per $cm^3$ in which heat exchange can take place is located in this region. In the other lighter colored regions, the pitch of the fins may preferably increase with the decrease in flow rate. The lower the flow rate, the larger is the selected pitch of the fins interposed between two adjacent heat exchange layers.

With reference to fig. 10b, the pitches of the fins have been so selected. For the region R1, a first couple of adjacent layers $8_{11}$ and $8_{12}$ and a second couple of adjacent layers $8_{12}$ and $8_{21}$, all present in the region R1, are separated each by a first plurality of fins $50_1$ having a pitch P3, which is the smallest pitch selected for the fins of this module. Moreover, for the regions R2, the heat exchange layers present in this region, i.e., a third couple of layers $8_{21}$ and $8_{22}$, a fourth couple of adjacent layers $8_{11}$ and $8_{31}$, and a fifth couple of adjacent layers $8_{31}$ and $8_{32}$, are separated each by a second plurality of fins $50_2$ having a second pitch equal to P2. When it comes to the third regions R3, again the adjacent layers present in this region, namely a sixth couple of adjacent layers $8_{32}$ and $8_{41}$, a seventh couple of adjacent layers $8_{41}$ and $8_{42}$ and a eighth couple of adjacent layers $8_{42}$ and $8_{51}$ are each separated by third plurality of fins $50_3$ having a third pitch equal to P1. The relationship among the various pitches is that P3 < P2 < P1.

Preferably, 2 mm < P1,P2,P3 < 10 mm.

The steps of the method of the invention described with reference to figs. 9a-9c and 10a-10b can also be applied subsequently, e.g., first the distances among different adjacent layers is optimized as explained and then in the same module also the pitch of the fins is optimized according to the above described embodiment. Alternatively, first the pitch of the fins present among different adjacent layers is optimized and then in the same module also the distance of the adjacent heat exchange layers is optimized according to the above described embodiment.

The steps of the invention according to figs. 9a-9c and/or figs. 10a-10c are preferably repeated for each module belonging to the first and/or second heat exchanger 31,32 because, as already mentioned, due to the fact that the flow of process air downstream a module has been modified with respect to the same flow upstream the module due to the presence of the module itself.

## Claims

1. A laundry dryer (1) comprising:

   a. a casing (2) supporting a drying chamber (3) for receiving a load to be dried;
   b. A process air conduit (11) in communication with the drying chamber (3) where a process air stream is apt to flow, the air process circuit being a closed loop circuit;
   c. A heat pump (30) having a heat pump circuit in which a refrigerant (R) can flow, said heat pump circuit including a first heat exchanger (31) where the refrigerant is cooled off and the process air stream is heated up, and a second heat exchanger (32) where the refrigerant is heated up and the process air is cooled off; said first and/or second heat exchanger being thermally coupled to the process air conduit (11) to perform heat exchange between said refrigerant flowing in said heat pump circuit and said process air stream; said first and/or second heat exchanger (31;32) further comprising a heat exchanger module (10; 10'), said module including

   • An inlet header (5;5') to direct a flow of said refrigerant into said module;
   • an outlet header (6;6') to discharge said refrigerant from said module; and
   • a plurality of heat exchange layers (8,8') fluidly connecting said inlet (5;5') to said outlet header (6;6') to enable said refrigerant (R) to flow from said inlet to said outlet header and/or vice versa; said layers (8,8') being stacked one on top of the others and each layer including a plurality of channels;

   characterized in that said heat exchanger module (10,10') includes at least a first and a second couple of adjacent heat exchange layers ($8_{12}$, $8_{21}$ ; $8_{21}$, $8_{22}$; $8_{11}$, $8_{31}$; $8_{31}$, $8_{32}$; $8_{22}$, $8_{41}$) along said stackwise direction, a distance (D1, D2, D3) between the two adjacent heat exchange layers of said first couple being different than a distance (D1, D2, D3) between the two adjacent heat exchange layers of said second couple.

2. The laundry dryer (1) according to claim 1, wherein said distance (D1, D2, D3) between the two adjacent heat exchange layers of the first couple and the distance (D1, D2, D3) between the two adjacent heat exchange layers of said second couple are comprised between 5 mm and 20 mm.

3. The laundry dryer (1) according to claim 1 or 2, wherein said heat exchanger module (10,10') includes a first plurality of fins ($50_1$,$50_2$, $50_3$) having a first pitch (P1, P2, P3) connecting the two adjacent heat exchange layers of said first couple and a second plurality of fins ($50_1$,$50_2$, $50_3$) having a second pitch (P1, P2, P3) connecting said two adjacent heat exchange layers of said second couple; said first pitch being different than said second pitch.

4. A laundry dryer (1) comprising:

   a. a casing (2) supporting a drying chamber (3) for receiving a load to be dried;
   b. A process air conduit (11) in communication with the drying chamber (3) where a process air stream is apt to flow, the air process circuit is a closed loop circuit;
   c. A heat pump (30) having a heat pump circuit in which a refrigerant (R) can flow, said heat pump circuit including a first heat exchanger (31) where the refrigerant is cooled off and the process air stream is heated up, and a second heat exchanger (32) where the refrigerant is heated up and the process air is cooled off; said first and/or second heat exchanger being thermally coupled to the process air conduit (11) to perform heat exchange between said refrigerant flowing in said heat pump circuit and said process air stream; said first and/or second heat exchanger (31 ;32) further comprising a heat exchanger module (10; 10'), said module including

   • An inlet header (5;5') to direct a flow of said refrigerant into said module;
   • an outlet header (6;6') to discharge said refrigerant from said module; and
   • a plurality of heat exchange layers (8,8') fluidly connecting said inlet (5;5') to said outlet header (6;6') to enable said refrigerant (R) to flow from said inlet to said outlet header and/or vice versa; said layers (8,8') being stacked one on top of the others and each layer including a plurality of channels;

**characterized in that** said heat exchanger module (10,10') includes at least a first and a second couple of adjacent heat exchange layers ($8_{12}$, $8_{21}$ ; $8_{21}$, $8_{22}$; $8_{11}$, $8_{31}$; $8_{31}$, $8_{32}$; $8_{22}$, $8_{41}$) along said stackwise direction, a first plurality of fins ($50_1$,$50_2$, $50_3$) having a first pitch (P1,P2,P3) connecting the two adjacent heat exchange layers of said first couple and a second plurality of fins $50_1$,$50_2$, $50_3$) having a second pitch (P1,P2,P3) connecting said two adjacent heat exchange layers of said second couple; said first pitch being different than said second pitch.

5. The laundry dryer (1 according to claim 4, wherein said first and said second pitch (P1 ,P2,P3) are comprised between 2 mm and 10 mm.

6. The laundry dryer (1) according to claim 4 or 5, wherein a distance (D1 ,D2,D3) between the two adjacent heat exchange layers of said first couple is different than a distance (D1 ,D2,D3) between the two adjacent heat exchange layers of said second couple.

7. The laundry dryer (1) according to any of the preceding claims, wherein said heat exchange module (10,10') is located in an air duct (11a) of said air conduit (11), said module (10,10') and said air duct (11a) being reciprocally arranged so that a direction of flow of said process air entering in said air duct (11a) is substantially perpendicular to said stacking direction.

8. The laundry dryer (1) according to any of the preceding claims, wherein said heat exchange module (10,10') is located in an air duct (11a) of said air conduit (11), said air duct (11a) and said module (10,10') being reciprocally arranged so that a direction of flow of said process air entering in said air duct (11a) is substantially parallel to said heat exchange layers (8,8').

9. The laundry dryer (1) according to any of the preceding claims, wherein said air conduit (1 1) is so configured that the spatial distribution of flow rate of the process air through a transverse section of said air conduit (11) is spatially asymmetrical, having a region of higher flow rate (R1 ,R2) and a region of lower flow rate (R2,R3).

10. The laundry dryer (1) according to any of the preceding claims, including a fan (12) to circulate said process air within said air conduit (11), said fan being located centrally with respect to the cross section of said air conduit.

11. The laundry dryer (1) according to any of the preceding claims, including a fan (12) to circulate said process air within said air conduit (11), said fan being located off- center with respect to the cross section of said air conduit.

12. The laundry dryer according to claim 10 or 1 1 , wherein said fan is located within said air circuit (11) downstream of said first heat exchanger (31) and upstream said drying chamber (3) in the direction of flow of said process air.

13. The laundry dryer according to claim 10 or 1 1 , wherein said fan is located within said air circuit (11) downstream of said drying chamber (3) and upstream of the second heat exchanger (32) in the direction of flow of said process air.

14. The laundry dryer (1) according to claim from 10 to 13, wherein said fan (12) is so configured to blow said process air in such a way that the spatial distribution of the flow rate of the process air through a transverse section of said air conduit (11) is spatially asymmetrical, having a region of higher flow rate (R1 ,R2) and a region of lower flow rate (R2,R3).

15. The laundry dryer (1) according to claim 9 or 14 when dependent on any of claims from 1 to 3, wherein said distance (D1 ,D2,D3) between said adjacent heat exchange layers of said first couple is larger than said distance (D1 ,D2,D3) between said second couple layers if said higher intensity region (R2,R1) is substantially enclosing said second couple.

16. The laundry dryer (1) according to claim 9 or 14 when dependent on any of claims from 4 to 6, wherein said first pitch (P1 ,P2,P3) is smaller than said second pitch (P1 ,P2,P3) if said higher intensity region (R1, R2) is substantially enclosing said first couple.

17. The laundry dryer (1) according to any of the preceding claims, wherein both said first and second heat exchangers (31 ,32) include the heat exchanger module (10,10'), respectively called first and second heat exchanger module (10,10'), and a first longitudinal direction (X) of the heat exchange layers (8,8') of said first module and a second longitudinal direction (X) of the heat exchange layers (8,8') of said second module are substantially parallel to each other.

18. The laundry dryer (1) according to claim 17, wherein said first and/or second longitudinal direction (X) of said heat exchange layers (8,8') is substantially perpendicular to a direction of flow of said process air inside said air duct (1 1 a).

19. A method to improve the heat exchange in a heat pump laundry dryer (1), said laundry dryer (1) comprising:

 a. a casing (2) supporting a drying chamber (3) for receiving a load to be dried;
 b. A process air conduit (11) in communication with the drying chamber (3) where a process air stream is apt to flow, the air process circuit is a closed loop circuit;
 c. A heat pump (30) having a heat pump circuit in which a refrigerant (R) can flow, said heat pump circuit including a first heat exchanger (31) where the refrigerant is cooled off and the process air stream is heated up, and a second heat exchanger (32) where the refrigerant is heated up and the process air is cooled off; said first and/or second heat exchanger being thermally coupled to the process air conduit (11) to perform heat exchange between said refrigerant flowing in said heat pump circuit and said process air stream; said first and/or second heat exchanger (31 ;32) further comprising a heat exchanger module (10; 10'), said module including

  • An inlet header (5;5') to direct a flow of said refrigerant into said module;
  • an outlet header (6;6') to discharge said refrigerant from said module; and
  • a plurality of heat exchange layers (8,8') fluidly connecting said inlet (5;5') to said outlet header (6;6') to enable said refrigerant (R) to flow from said inlet to said outlet header and/or vice versa; said layers (8,8') being stacked one on top of the others and each layer including a plurality of channels;

the method including the steps of:

 • measuring the spatial distribution of the flow rate of the process air flow in a portion of said air circuit where said module (10,10') is located;
 • determining regions (R1, R2, R3) of higher flow rate and lower flow rate of said process air around said module;
 • selecting a distance (D1, D2, D3) along said stackwise direction between any two adjacent heat exchange layers so that the higher the flow rate of the region between said two adjacent heat exchange layers, the lower the distance between the same two heat exchange layers.

20. A method to improve the heat exchange in a heat pump laundry dryer (1), said laundry dryer (1) comprising:

 a. a casing (2) supporting a drying chamber (3) for receiving a load to be dried;
 b. A process air conduit (11) in communication with the drying chamber (3) where a process air stream is apt to flow, the air process circuit is a closed loop circuit;

c. A heat pump (30) having a heat pump circuit in which a refrigerant (R) can flow, said heat pump circuit including a first heat exchanger (31) where the refrigerant is cooled off and the process air stream is heated up, and a second heat exchanger (32) where the refrigerant is heated up and the process air is cooled off; said first and/or second heat exchanger being thermally coupled to the process air conduit (11) to perform heat exchange between said refrigerant flowing in said heat pump circuit and said process air stream; said first and/or second heat exchanger (31; 32) further comprising a heat exchanger module (10; 10'), said module including

    • An inlet header (5;5') to direct a flow of said refrigerant into said module;
    • an outlet header (6;6') to discharge said refrigerant from said module; and
    • a plurality of heat exchange layers (8,8') fluidly connecting said inlet (5;5') to said outlet header (6;6') to enable said refrigerant (R) to flow from said inlet to said outlet header and/or vice versa; said layers (8,8') being stacked one on top of the others and each layer including a plurality of channels; wherein said heat exchanger module (10,10') includes at least a first, a second and a third heat exchange layers (8,8'), one adjacent to the other in this order along said stackwise direction;

the method including the steps of:

    • measuring the spatial distribution of the flow rate of the process air flow in a portion of said air circuit where said module (10) is located;
    • determining regions (R1, R2, R3) of higher flow rate and lower flow rate of said process air around said module;
    • connecting two adjacent heat exchange layers of said module with a plurality of fins ($50_1, 50_2, 50_3$) having a pitch (P1, P2, P3);
    • selecting the pitch of said plurality of fins ($50_1, 50_2, 50_3$) so that the higher the flow rate of the region between said two adjacent heat exchange layers connected by said plurality of fins, the lower the pitch of the plurality of fins located between the same two adjacent heat exchange layers.

**Patentansprüche**

1.    Wäschetrockner (1), der Folgendes umfasst:

a. ein Gehäuse (2), das eine Trocknungskammer (3) zur Aufnahme einer zu trocknenden Ladung trägt;

b. eine Prozessluftleitung (11) in Verbindung mit der Trocknungskammer (3), in der ein Prozessluftstrom dazu geeignet ist, zu strömen, wobei der Prozessluftkreis ein geschlossener Kreis ist;

c. eine Wärmepumpe (30) mit einem Wärmepumpenkreis, in dem ein Kältemittel (R) strömen kann, wobei der Wärmepumpenkreis einen ersten Wärmetauscher (31), in dem das Kältemittel abgekühlt und der Prozessluftstrom erwärmt wird, und einen zweiten Wärmetauscher (32), in dem das Kältemittel erwärmt und die Prozessluft abgekühlt wird, enthält; wobei der erste und/oder der zweite Wärmetauscher thermisch mit der Prozessluftleitung (11) gekoppelt sind, um zwischen dem Kältemittel, das im Wärmepumpenkreis strömt, und dem Prozessluftstrom Wärmeaustausch durchzuführen; wobei der erste und/oder der zweite Wärmetauscher (31; 32) des Weiteren ein Wärmetauschermodul (10; 10') umfassen; wobei das Modul Folgendes enthält:

    • ein Einlasskopfstück (5; 5'), um einen Strom des Kältemittels in das Modul zu leiten;
    • ein Auslasskopfstück (6; 6'), um das Kältemittel aus dem Modul abzuleiten; und
    • eine Vielzahl von Wärmeaustauschschichten (8, 8'), die das Einlass- (5; 5') mit dem Auslasskopfstück (6; 6') fluidisch verbinden, um es dem Kältemittel (R) zu ermöglichen, aus dem Einlass- zum Auslasskopfstück und/oder umgekehrt zu strömen; wobei die Schichten (8, 8') übereinander geschichtet sind und jede Schicht eine Vielzahl von Kanälen enthält;

**dadurch gekennzeichnet, dass** das Wärmetauschermodul (10, 10') wenigstens ein erstes und ein zweites Paar benachbarter Wärmeaustauschschichten ($8_{12}$, $8_{21}$; $8_{21}$, $8_{22}$; $8_{11}$, $8_{31}$; $8_{31}$, $8_{32}$; $8_{22}$, $8_{41}$) entlang der Schichtungsrichtung enthält, wobei sich ein Abstand (D1, D2, D3) zwischen den beiden benachbarten Wärmeaustauschschichten des ersten Paars von einem Abstand (D1, D2, D3) zwischen den beiden benachbarten Wärmeaustauschschichten des zweiten Paars unterscheidet.

2.    Wäschetrockner (1) nach Anspruch 1, wobei der Abstand (D1, D2, D3) zwischen den beiden Wärmeaustauschschichten des ersten Paars und der Abstand (D1, D2, D3) zwischen den beiden benachbarten Wärmeaustauschschichten des zweiten Paars zwischen 5 mm und 20 mm betragen.

**3.** Wäschetrockner (1) nach Anspruch 1 oder 2, wobei das Wärmetauschermodul (10, 10') eine erste Vielzahl von Kühlrippen ($50_1$, $50_2$, $50_3$) mit einem ersten Neigungswinkel (P1, P2, P3), die die beiden benachbarten Wärmeaustauschschichten des ersten Paars verbinden, und eine zweite Vielzahl von Kühlrippen ($50_1$, $50_2$, $50_3$) mit einem zweiten Neigungswinkel (P1, P2, P3), die zwei benachbarte Wärmeaustauschschichten des zweiten Paars verbinden, enthält; wobei sich der erste Neigungswinkel vom zweiten Neigungswinkel unterscheidet.

**4.** Wäschetrockner (1), der Folgendes umfasst:

a. ein Gehäuse (2), das eine Trocknungskammer (3) zur Aufnahme einer zu trocknenden Ladung trägt;
b. eine Prozessluftleitung (11) in Verbindung mit der Trocknungskammer (3), in der ein Prozessluftstrom dazu geeignet ist, zu strömen, wobei der Prozessluftkreis ein geschlossener Kreis ist;
c. eine Wärmepumpe (30) mit einem Wärmepumpenkreis, in dem ein Kältemittel (R) strömen kann, wobei der Wärmepumpenkreis einen ersten Wärmetauscher (31), in dem das Kältemittel abgekühlt und der Prozessluftstrom erwärmt wird, und einen zweiten Wärmetauscher (32), in dem das Kältemittel erwärmt und die Prozessluft abgekühlt wird, enthält; wobei der erste und/oder der zweite Wärmetauscher thermisch mit der Prozessluftleitung (11) gekoppelt sind, um zwischen dem Kältemittel, das im Wärmepumpenkreis strömt, und dem Prozessluftstrom Wärmeaustausch durchzuführen; wobei der erste und/oder der zweite Wärmetauscher (31; 32) des Weiteren ein Wärmetauschermodul (10; 10') umfassen; wobei das Modul Folgendes enthält:

• ein Einlasskopfstück (5; 5'), um einen Strom des Kältemittels in das Modul zu leiten;
• ein Auslasskopfstück (6; 6'), um das Kältemittel aus dem Modul abzuleiten; und
• eine Vielzahl von Wärmeaustauschschichten (8, 8'), die das Einlass- (5; 5') mit dem Auslasskopfstück (6; 6') fluidisch verbinden, um es dem Kältemittel (R) zu ermöglichen, aus dem Einlass- zum Auslasskopfstück und/oder umgekehrt zu strömen; wobei die Schichten (8, 8') übereinander geschichtet sind und jede Schicht eine Vielzahl von Kanälen enthält;

**dadurch gekennzeichnet, dass** das Wärmetauschermodul (10, 10') wenigstens ein erstes und ein zweites Paar benachbarter Wärmeaustauschschichten ($8_{12}$, $8_{21}$; $8_{21}$, $8_{22}$; $8_{11}$, $8_{31}$; $8_{31}$, $8_{32}$; $8_{22}$,

$8_{41}$) entlang der Schichtungsrichtung, eine erste Vielzahl von Kühlrippen ($50_1$, $50_2$, $50_3$) mit einem ersten Neigungswinkel (P1, P2, P3), die die beiden benachbarten Wärmeaustauschschichten des ersten Paars verbinden, und eine zweite Vielzahl von Kühlrippen ($50_1$, $50_2$, $50_3$) mit einem zweiten Neigungswinkel (P1, P2, P3), die die beiden benachbarten Wärmeaustauschschichten des zweiten Paars verbinden, enthält; wobei sich der erste Neigungswinkel vom zweiten Neigungswinkel unterscheidet.

**5.** Wäschetrockner (1) nach Anspruch 4, wobei der erste und der zweite Neigungswinkel (P1, P2, P3) zwischen 2 mm und 10 mm betragen.

**6.** Wäschetrockner (1) nach Anspruch 4 oder 5, wobei sich ein Abstand (D1, D2, D3) zwischen den beiden Wärmeaustauschschichten des ersten Paars von einem Abstand (D1, D2, D3) zwischen den beiden benachbarten Wärmeaustauschschichten des zweiten Paars unterscheidet.

**7.** Wäschetrockner (1) nach einem der vorhergehenden Ansprüche, wobei das Wärmeaustauschmodul (10, 10') in einem Luftschacht (11a) der Luftleitung (11) liegt, wobei das Modul (10, 10') und der Luftschacht (11a) wechselweise angeordnet sind, so dass eine Strömungsrichtung der Prozessluft, die in den Luftschacht (11a) eintritt, im Wesentlichen rechtwinklig zur Schichtungsrichtung verläuft.

**8.** Wäschetrockner (1) nach einem der vorhergehenden Ansprüche, wobei das Wärmeaustauschmodul (10, 10') in einem Luftschacht (11a) der Luftleitung (11) liegt, wobei der Luftschacht (11a) und das Modul (10, 10') wechselweise angeordnet sind, so dass eine Strömungsrichtung der Prozessluft, die in den Luftschacht (11a) eintritt, im Wesentlichen parallel zu den Wärmeaustauschschichten (8, 8') verläuft.

**9.** Wäschetrockner (1) nach einem der vorhergehenden Ansprüche, wobei die Luftleitung (11) so ausgebildet ist, dass die räumliche Verteilung der Strömungsrate der Prozessluft durch einen querlaufenden Abschnitt der Luftleitung (11) räumlich asymmetrisch ist, wobei sie einen Bereich mit einer höheren Strömungsrate (R1, R2) und einen Bereich mit einer geringeren Strömungsrate (R2, R3) aufweist.

**10.** Wäschetrockner (1) nach einem der vorhergehenden Ansprüche, der ein Gebläse (12) zum Zirkulieren der Prozessluft in der Luftleitung (11) enthält, wobei das Gebläse in Bezug auf den Querschnitt der Luftleitung mittig liegt.

**11.** Wäschetrockner (1) nach einem der vorhergehenden Ansprüche, der ein Gebläse (12) zum Zirkulieren der Prozessluft in der Luftleitung (11) enthält, wobei das Gebläse in Bezug auf den Querschnitt der Luftleitung außermittig liegt.

12. Wäschetrockner nach Anspruch 10 oder 11, wobei das Gebläse im Luftkreis (11) in der Strömungsrichtung der Prozessluft dem ersten Wärmetauscher (31) nachgelagert und der Trocknungskammer (3) vorgelagert liegt.

13. Wäschetrockner nach Anspruch 10 oder 11, wobei das Gebläse im Luftkreis (11) in der Strömungsrichtung der Prozessluft der Trocknungskammer (3) nachgelagert und dem zweiten Wärmetauscher (32) vorgelagert liegt.

14. Wäschetrockner (1) nach Anspruch 10 bis 13, wobei das Gebläse (12) so ausgebildet ist, dass es die Prozessluft auf eine solche Weise bläst, dass die räumliche Verteilung der Strömungsrate der Prozessluft durch einen querlaufenden Abschnitt der Luftleitung (11) räumlich asymmetrisch ist, wobei sie einen Bereich mit einer höheren Strömungsrate (R1, R2) und einen Bereich mit einer geringeren Strömungsrate (R2, R3) aufweist.

15. Wäschetrockner (1) nach Anspruch 9 oder 14, sofern abhängig von einem der Ansprüche 1 bis 3, wobei der Abstand (D1, D2, D3) zwischen den benachbarten Wärmeaustauschschichten des ersten Paars größer als der Abstand (D1, D2, D3) zwischen den Schichten des zweiten Paars ist, wenn der Bereich (R2, R1) mit höherer Intensität im Wesentlichen das zweiten Paar einschließt.

16. Wäschetrockner (1) nach Anspruch 9 oder 14, sofern abhängig von einem der Ansprüche 4 bis 6, wobei der erste Neigungswinkel (P1, P2, P3) kleiner als der zweite Neigungswinkel (P1, P2, P3) ist, wenn der Bereich (R1, R2) mit höherer Intensität im Wesentlichen das erste Paar einschließt.

17. Wäschetrockner (1) nach einem der vorhergehenden Ansprüche, wobei sowohl der erste als auch der zweite Wärmetauscher (31, 32) das Wärmetauschermodul (10, 10') enthält, die das erste bzw. das zweite Wärmetauschermodul (10, 10') genannt werden, und eine erste Längsrichtung (X) der Wärmeaustauschschichten (8, 8') des ersten Moduls und eine zweite Längsrichtung (X) der Wärmeaustauschschichten (8, 8') des zweiten Moduls im Wesentlichen parallel zueinander sind.

18. Wäschetrockner (1) nach Anspruch 17, wobei die erste und/oder die zweite Längsrichtung (X) der Wärmeaustauschschichten (8, 8') im Wesentlichen rechtwinklig zu einer Strömungsrichtung der Prozessluft im Luftschacht (11a) ist.

19. Verfahren zum Verbessern des Wärmeaustauschs in einem Wärmepumpenwäschetrockner (1), wobei der Wäschetrockner (1) Folgendes umfasst:

a. ein Gehäuse (2), das eine Trocknungskammer (3) zur Aufnahme einer zu trocknenden Ladung trägt;
b. eine Prozessluftleitung (11) in Verbindung mit der Trocknungskammer (3), in der ein Prozessluftstrom dazu geeignet ist, zu strömen, wobei der Prozessluftkreis ein geschlossener Kreis ist;
c. eine Wärmepumpe (30) mit einem Wärmepumpenkreis, in dem ein Kältemittel (R) strömen kann, wobei der Wärmepumpenkreis einen ersten Wärmetauscher (31), in dem das Kältemittel abgekühlt und der Prozessluftstrom erwärmt wird, und einen zweiten Wärmetauscher (32), in dem das Kältemittel erwärmt und die Prozessluft abgekühlt wird, enthält; wobei der erste und/oder der zweite Wärmetauscher thermisch mit der Prozessluftleitung (11) gekoppelt sind, um zwischen dem Kältemittel, das im Wärmepumpenkreis strömt, und dem Prozessluftstrom Wärmeaustausch durchzuführen; wobei der erste und/oder der zweite Wärmetauscher (31; 32) des Weiteren ein Wärmetauschermodul (10; 10') umfassen; wobei das Modul Folgendes enthält:

• ein Einlasskopfstück (5; 5'), um einen Strom des Kältemittels in das Modul zu leiten;
• ein Auslasskopfstück (6; 6'), um das Kältemittel aus dem Modul abzuleiten; und
• eine Vielzahl von Wärmeaustauschschichten (8, 8'), die das Einlass- (5; 5') mit dem Auslasskopfstück (6; 6') fluidisch verbinden, um es dem Kältemittel (R) zu ermöglichen, aus dem Einlass- zum Auslasskopfstück und/oder umgekehrt zu strömen; wobei die Schichten (8, 8') übereinander geschichtet sind und jede Schicht eine Vielzahl von Kanälen enthält;

wobei das Verfahren die folgenden Schritte beinhaltet:

• die räumliche Verteilung der Strömungsrate des Prozessluftstroms in einem Abschnitt der Luftleitung zu messen, in dem das Modul (10, 10') liegt;
• Bereiche (R1, R2, R3) mit höherer Strömungsrate und geringerer Strömungsrate der Prozessluft um das Modul zu bestimmen;
• einen Abstand (D1, D2, D3) entlang der Schichtungsrichtung zwischen irgendwelchen zwei benachbarten Wärmeaustauschschichten auszuwählen, so dass, je höher die Strömungsrate des Bereichs zwischen zwei benachbarten Wärmeaustauschschichten ist, desto geringer der Abstand zwischen den selben beiden Wärmeaustauschschichten ist.

20. Verfahren zum Verbessern des Wärmeaustauschs in einem Wärmepumpenwäschetrockner (1), wobei der Wäschetrockner (1) Folgendes umfasst:

a. ein Gehäuse (2), das eine Trocknungskammer (3) zur Aufnahme einer zu trocknenden Ladung trägt;

b. eine Prozessluftleitung (11) in Verbindung mit der Trocknungskammer (3), in der ein Prozessluftstrom dazu geeignet ist, zu strömen, wobei der Prozessluftkreis ein geschlossener Kreis ist;

c. eine Wärmepumpe (30) mit einem Wärmepumpenkreis, in dem ein Kältemittel (R) strömen kann, wobei der Wärmepumpenkreis einen ersten Wärmetauscher (31), in dem das Kältemittel abgekühlt und der Prozessluftstrom erwärmt wird, und einen zweiten Wärmetauscher (32), in dem das Kältemittel erwärmt und die Prozessluft abgekühlt wird, enthält; wobei der erste und/oder der zweite Wärmetauscher thermisch mit der Prozessluftleitung (11) gekoppelt sind, um zwischen dem Kältemittel, das im Wärmepumpenkreis strömt, und dem Prozessluftstrom Wärmeaustausch durchzuführen; wobei der erste und/oder der zweite Wärmetauscher (31; 32) des Weiteren ein Wärmetauschermodul (10; 10') umfassen; wobei das Modul Folgendes enthält:

• ein Einlasskopfstück (5; 5'), um einen Strom des Kältemittels in das Modul zu leiten;
• ein Auslasskopfstück (6; 6'), um das Kältemittel aus dem Modul abzuleiten; und
• eine Vielzahl von Wärmeaustauschschichten (8, 8'), die das Einlass- (5; 5') mit dem Auslasskopfstück (6; 6') fluidisch verbinden, um es dem Kältemittel (R) zu ermöglichen, aus dem Einlass- zum Auslasskopfstück und/oder umgekehrt zu strömen; wobei die Schichten (8, 8') übereinander geschichtet sind und jede Schicht eine Vielzahl von Kanälen enthält; wobei das Wärmetauschermodul (10, 10') wenigstens eine erste, eine zweite und eine dritte Wärmeaustauschschicht (8, 8') enthält, die in dieser Reihenfolge entlang der Schichtungsrichtung benachbart zueinander liegen;

wobei das Verfahren die folgenden Schritte beinhaltet:

• die räumliche Verteilung der Strömungsrate des Prozessluftstroms in einem Abschnitt des Luftkreises zu messen, in dem das Modul (10) liegt;
• Bereiche (R1, R2, R3) mit höherer Strömungsrate und geringerer Strömungsrate der Prozessluft um das Modul zu bestimmen;
• zwei benachbarte Wärmeaustauschschichten des Moduls mit einer Vielzahl von Kühlrippen ($50_1$, $50_2$, $50_3$) mit einem Neigungswinkel (P1, P2, P3) zu verbinden;
• den Neigungswinkel der Vielzahl von Kühlrippen ($50_1$, $50_2$, $50_3$) auszuwählen, so dass, je höher die Strömungsrate des Bereichs zwischen zwei benachbarten Wärmeaustauschschichten ist, die durch die Vielzahl von Kühlrippen verbunden sind, desto geringer der Neigungswinkel der Vielzahl von Kühlrippen ist, die zwischen den selben beiden benachbarten Wärmeaustauschschichten liegen.

**Revendications**

1. Sèche-linge (1), comprenant :

a. une caisse (2) supportant une chambre de séchage (3) permettant de recevoir une charge à sécher ;
b. un conduit d'air de traitement (11) en communication avec la chambre de séchage (3) où un flux d'air de traitement peut circuler, le circuit de traitement d'air étant un circuit en boucle fermée ;
c. une pompe à chaleur (30) comprenant un circuit de pompe à chaleur dans lequel un fluide frigorigène (R) peut circuler, ledit circuit de pompe à chaleur comprenant un premier échangeur de chaleur (31) où le fluide frigorigène est refroidi et le flux d'air de traitement est chauffé, et un second échangeur de chaleur (32) où le fluide frigorigène est chauffé et l'air de traitement est refroidi ; ledit premier et/ou ledit second échangeur de chaleur étant accouplés thermiquement au conduit d'air de traitement (11) pour réaliser un échange de chaleur entre ledit fluide frigorigène circulant dans ledit circuit de pompe à chaleur et ledit flux d'air de traitement ; ledit premier et/ou ledit second échangeur de chaleur (31 ; 32) comprenant en outre un module échangeur de chaleur (10 ; 10'), ledit module comprenant :

• un collecteur d'entrée (5 ; 5') pour diriger une circulation dudit fluide frigorigène dans ledit module ;

• un collecteur de sortie (6 ; 6') pour évacuer ledit fluide frigorigène dudit module ; et

• une pluralité de couches d'échange de chaleur (8, 8') raccordant fluidiquement ladite entrée (5 ; 5') audit collecteur de sortie (6 ; 6') pour permettre audit fluide frigorigène (R) de circuler de ladite entrée audit collecteur de sortie et/ou inversement ; lesdites couches (8, 8') étant empilées les unes sur les autres et chaque couche comprenant une pluralité de canaux ;

le sèche-linge étant **caractérisé en ce que** ledit module échangeur de chaleur (10, 10') comprend au moins un premier et un second couple de couches adjacentes d'échange de chaleur (812, 821 ; 821, 822 ; 811, 831 ; 831, $8_{32}$ ; $8_{22}$, $8_{41}$) suivant ladite direction d'empilement, une distance (D1, D2, D3) entre les deux couches adjacentes d'échange de chaleur dudit premier couple étant différente d'une distance (D1, D2, D3) entre les deux couches adjacentes d'échange de chaleur dudit second couple.

2. Sèche-linge (1) selon la revendication 1, dans lequel ladite distance (D1, D2, D3) entre les deux couches adjacentes d'échange de chaleur du premier couple et la distance (D1, D2, D3) entre les deux couches adjacentes d'échange de chaleur dudit second couple sont comprises entre 5 mm et 20 mm.

3. Sèche-linge (1) selon la revendication 1 ou 2, dans lequel ledit module échangeur de chaleur (10, 10') comprend une première pluralité d'ailettes ($50_1$, $50_2$, $50_3$) ayant un premier pas (P1, P2, P3) et connectant les deux couches adjacentes d'échange de chaleur dudit premier couple et une seconde pluralité d'ailettes ($50_1$, $50_2$, $50_3$) ayant un second pas (P1, P2, P3) et connectant lesdites deux couches adjacentes d'échange de chaleur dudit second couple ; ledit premier pas étant différent dudit second pas.

4. Sèche-linge (1), comprenant :

a. une caisse (2) supportant une chambre de séchage (3) permettant de recevoir une charge à sécher ;
b. un conduit d'air de traitement (11) en communication avec la chambre de séchage (3) où un flux d'air de traitement peut circuler, le circuit de traitement d'air étant un circuit en boucle fermée ;
c. une pompe à chaleur (30) comprenant un circuit de pompe à chaleur dans lequel un fluide frigorigène (R) peut circuler, ledit circuit de pompe à chaleur comprenant un premier échangeur de chaleur (31) où le fluide frigorigène est refroidi et le flux d'air de traitement est chauffé, et un second échangeur de chaleur (32) où le fluide frigorigène est chauffé et l'air de traitement est refroidi ; ledit premier et/ou ledit second échangeur de chaleur étant accouplés thermiquement au conduit d'air de traitement (11) pour réaliser un échange de chaleur entre ledit fluide frigorigène circulant dans ledit circuit de pompe à chaleur et ledit flux d'air de traitement ; ledit premier et/ou ledit second échangeur de chaleur (31 ; 32) comprenant en outre un module échangeur de chaleur (10 ; 10'), ledit module comprenant :

• un collecteur d'entrée (5 ; 5') pour diriger une circulation dudit fluide frigorigène dans ledit module ;
• un collecteur de sortie (6 ; 6') pour évacuer ledit fluide frigorigène dudit module ; et
• une pluralité de couches d'échange de chaleur (8, 8') raccordant fluidiquement ladite entrée (5 ; 5') audit collecteur de sortie (6 ; 6') pour permettre audit fluide frigorigène (R) de circuler de ladite entrée audit collecteur de sortie et/ou inversement ; lesdites couches (8, 8') étant empilées les unes sur les autres et chaque couche comprenant une pluralité de canaux ;

le sèche-linge étant **caractérisé en ce que** ledit module échangeur de chaleur (10, 10') comprend au moins un premier et un second couple de couches adjacentes d'échange de chaleur (812, 821 ; 821, 822 ; 811, 831 ; 831, $8_{32}$ ; $8_{22}$, $8_{41}$) suivant ladite direction d'empilement, une première pluralité d'ailettes ($50_1$, $50_2$, $50_3$) ayant un premier pas (P1, P2, P3) et connectant les deux couches adjacentes d'échange de chaleur dudit premier couple et une seconde pluralité d'ailettes ($50_1$, $50_2$, $50_3$) ayant un second pas (P1, P2, P3) et connectant lesdites deux couches adjacentes d'échange de chaleur dudit second couple ; ledit premier pas étant différent dudit second pas.

5. Sèche-linge (1) selon la revendication 4, dans lequel lesdits premier et second pas (P1, P2, P3) sont compris entre 2 mm et 10 mm.

6. Sèche-linge (1) selon la revendication 4 ou 5, dans lequel une distance (D1, D2, D3) entre les deux couches adjacentes d'échange de chaleur dudit premier couple est différente d'une distance (D1, D2, D3) entre les deux couches adjacentes d'échange de chaleur dudit second couple.

7. Sèche-linge (1) selon l'une quelconque des revendications précédentes, dans lequel ledit module d'échange de chaleur (10, 10') est situé dans un tuyau d'air (11a) du conduit d'air (11), ledit module (10, 10') et ledit tuyau d'air (11a) étant agencés réciproquement de sorte qu'une direction de circulation dudit air de traitement entrant dans ledit tuyau d'air (11a) soit sensiblement perpendiculaire à ladite direction d'empilement.

8. Sèche-linge (1) selon l'une quelconque des revendications précédentes, dans lequel ledit module d'échange de chaleur (10, 10') est situé dans un tuyau d'air (11a) dudit conduit d'air (11), ledit tuyau d'air (11a) et ledit module (10, 10') étant agencés réciproquement de sorte qu'une direction de circulation dudit air de traitement entrant dans ledit tuyau d'air (11a) soit sensiblement parallèle auxdites couches d'échange de chaleur (8, 8').

9. Sèche-linge (1) selon l'une quelconque des revendications précédentes, dans lequel ledit conduit d'air (11) est configuré de sorte que la distribution spatiale du débit de l'air de traitement dans une section transversale dudit conduit d'air (11) soit spatialement asymétrique, avec une région d'un débit plus élevé (R1, R2) et une région d'un débit plus faible (R2, R3).

10. Sèche-linge (1) selon l'une quelconque des revendications précédentes, comprenant un ventilateur (12) pour faire circuler ledit air de traitement dans ledit conduit d'air (11), ledit ventilateur étant situé au centre par rapport à la section transversale dudit conduit d'air.

11. Sèche-linge (1) selon l'une quelconque des revendications précédentes, comprenant un ventilateur (12) pour faire circuler ledit air de traitement dans ledit conduit d'air (11), ledit ventilateur étant excentré par rapport à la section transversale dudit conduit d'air.

12. Sèche-linge selon la revendication 10 ou 11, dans lequel ledit ventilateur est situé dans ledit circuit d'air (11) en aval dudit premier échangeur de chaleur (31) et en amont de ladite chambre de séchage (3) dans la direction de circulation dudit air de traitement.

13. Sèche-linge selon la revendication 10 ou 11, dans lequel ledit ventilateur est situé dans ledit circuit d'air (11) en aval de ladite chambre de séchage (3) et en amont du second échangeur de chaleur (32) dans la direction de circulation dudit air de traitement.

14. Sèche-linge (1) selon l'une des revendications 10 à 13, dans lequel ledit ventilateur (12) est configuré de manière à souffler ledit air de traitement de sorte que la distribution spatiale du débit de l'air de traitement dans une section transversale dudit conduit d'air (11) soit spatialement asymétrique, avec une région d'un débit plus élevé (R1, R2) et une région d'un débit plus faible (R2, R3).

15. Sèche-linge (1) selon la revendication 9 ou 14 prise en dépendance de l'une quelconque des revendications 1 à 3, dans lequel ladite distance (D1, D2, D3) entre lesdites couches adjacentes d'échange de chaleur dudit premier couple est plus grande que ladite distance (D1, D2, D3) entre lesdites couches dudit second couple si ladite région d'intensité supérieure (R2, R1) enferme sensiblement ledit second couple.

16. Sèche-linge (1) selon la revendication 9 ou 14 prise en dépendance de l'une quelconque des revendications 4 à 6, dans lequel ledit premier pas (P1, P2, P3) est plus petit que ledit second pas (P1, P2, P3) si ladite région d'intensité supérieure (R1, R2) enferme sensiblement ledit premier couple.

17. Sèche-linge (1) selon l'une quelconque des revendications précédentes, dans lequel lesdits premier et second échangeurs de chaleur (31, 32) comprennent le module échangeur de chaleur (10, 10'), dénommé respectivement premier et second module échangeur de chaleur (10, 10'), et une première direction longitudinale (X) des couches d'échange de chaleur (8, 8') dudit premier module et une seconde direction longitudinale (X) des couches d'échange de chaleur (8, 8') dudit second module sont sensiblement parallèles l'une à l'autre.

18. Sèche-linge (1) selon la revendication 17, dans lequel ladite première et/ou ladite seconde direction longitudinale (X) desdites couches d'échange de chaleur (8, 8') sont sensiblement perpendiculaires à une direction de circulation dudit air de traitement à l'intérieur dudit tuyau d'air (11a).

19. Procédé d'amélioration de l'échange de chaleur dans un sèche-linge à pompe à chaleur (1), ledit sèche-linge (1) comprenant :

a. une caisse (2) supportant une chambre de séchage (3) permettant de recevoir une charge à sécher ;
b. un conduit d'air de traitement (11) en communication avec la chambre de séchage (3) où un flux d'air de traitement peut circuler, le circuit de traitement d'air étant un circuit en boucle fermée ;
c. une pompe à chaleur (30) comprenant un circuit de pompe à chaleur dans lequel un fluide frigorigène (R) peut circuler, ledit circuit de pompe à chaleur comprenant un premier échangeur de chaleur (31) où le fluide frigorigène est refroidi et le flux d'air de traitement est chauffé, et un second échangeur de chaleur (32) où le fluide frigorigène est chauffé et l'air de traitement est refroidi ; ledit premier et/ou ledit second échangeur de chaleur étant accouplés thermiquement au conduit d'air de traitement (11) pour réaliser un échange de chaleur entre ledit fluide frigorigène circulant dans ledit circuit de pompe à chaleur et ledit flux d'air de traitement ; ledit premier et/ou ledit second échangeur de chaleur (31 ; 32) comprenant en outre un module échangeur de chaleur (10 ; 10'), ledit module comprenant :

• un collecteur d'entrée (5 ; 5') pour diriger une circulation dudit fluide frigorigène dans ledit module ;
• un collecteur de sortie (6 ; 6') pour évacuer ledit fluide frigorigène dudit module ; et
• une pluralité de couches d'échange de chaleur (8, 8') raccordant fluidiquement ladite entrée (5 ; 5') audit collecteur de sortie (6 ; 6') pour permettre audit fluide frigorigène (R) de circuler de ladite entrée audit collecteur de sortie et/ou inversement ; lesdites couches (8, 8') étant empilées les unes sur les autres et chaque couche comprenant une pluralité de canaux ;

le procédé comprenant les étapes consistant à :

• mesurer la distribution spatiale du débit du flux d'air de traitement dans une partie dudit circuit d'air où se trouve ledit module (10, 10') ;
• déterminer des régions (R1, R2, R3) d'un débit plus élevé et d'un débit plus faible dudit flux d'air de traitement autour dudit module ;
• sélectionner une distance (D1, D2, D3) suivant ladite direction d'empilement entre deux couches adjacentes d'échange de chaleur de sorte que plus le débit de la région entre lesdites deux couches adjacentes d'échange de chaleur est élevé, plus la distance entre les deux mêmes couches d'échange de chaleur est faible.

**20.** Procédé d'amélioration de l'échange de chaleur dans un sèche-linge à pompe à chaleur (1), ledit sèche-linge (1) comprenant :

a. une caisse (2) supportant une chambre de séchage (3) permettant de recevoir une charge à sécher ;
b. un conduit d'air de traitement (11) en communication avec la chambre de séchage (3) où un flux d'air de traitement peut circuler, le circuit de traitement d'air étant un circuit en boucle fermée ;
c. une pompe à chaleur (30) comprenant un circuit de pompe à chaleur dans lequel un fluide frigorigène (R) peut circuler, ledit circuit de pompe à chaleur comprenant un premier échangeur de chaleur (31) où le fluide frigorigène est refroidi et le flux d'air de traitement est chauffé, et un second échangeur de chaleur (32) où le fluide frigorigène est chauffé et l'air de traitement est refroidi ; ledit premier et/ou ledit second échangeur de chaleur étant accouplés thermiquement au conduit d'air de traitement (11) pour réaliser un échange de chaleur entre ledit fluide frigorigène circulant dans ledit circuit de pompe à chaleur et ledit flux d'air de traitement ; ledit premier et/ou ledit second échangeur de chaleur (31 ; 32) comprenant en outre un module échangeur de chaleur (10 ; 10'), ledit module comprenant :

• un collecteur d'entrée (5 ; 5') pour diriger une circulation dudit fluide frigorigène dans ledit module ;
• un collecteur de sortie (6 ; 6') pour évacuer ledit fluide frigorigène dudit module ; et
• une pluralité de couches d'échange de chaleur (8, 8') raccordant fluidiquement ladite entrée (5 ; 5') audit collecteur de sortie (6 ; 6') pour permettre audit fluide frigorigène (R) de circuler de ladite entrée audit collecteur de sortie et/ou inversement ; lesdites couches (8, 8') étant empilées les unes sur les autres et chaque couche comprenant une pluralité de canaux ; ledit module échangeur de chaleur (10, 10') comprenant au moins des première, deuxième et troisième couches d'échange de chaleur (8, 8'), adjacentes les unes aux autres dans cet ordre suivant ladite direction d'empilement ;

le procédé comprenant les étapes consistant à :

• mesurer la distribution spatiale du débit du flux d'air de traitement dans une partie dudit circuit d'air où se trouve ledit module (10) ;
• déterminer des régions (R1, R2, R3) d'un débit plus élevé et d'un débit plus faible dudit flux d'air de traitement autour dudit module ;
• connecter deux couches adjacentes d'échange de chaleur dudit module avec une pluralité d'ailettes ($50_1$, $50_2$, $50_3$) ayant un pas (P1, P2, P3) ;
• sélectionner le pas de ladite pluralité d'ailettes ($50_1$, $50_2$, $50_3$) de sorte que plus le débit de la région entre lesdites deux couches adjacentes d'échange de chaleur connectées par ladite pluralité d'ailettes est élevé, plus le pas de la pluralité d'ailettes situées entre les deux mêmes couches adjacentes d'échange de chaleur est faible.

FIG. 1

FIG. 3

FIG. 2

FIG. 12

FIG. 4a

FIG. 4b

EP 3 014 010 B1

EP 3 014 010 B1

FIG. 5a

FIG. 5b

FIG. 6a

10'

6'

8'

10

5'

8

5

FIG. 6b

X

Y

10'

6'

5

5'

10

6

6

Z

FIG. 7a

FIG. 7b

FIG. 8a

FIG. 8b

FIG. 9a

FIG. 9b

FIG. 9c

FIG. 11a

FIG. 11b

FIG. 11c

EP 3 014 010 B1

FIG. 10a

FIG. 10b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1209277 A
- US 20110280736 A

- DE 102011104853